# EUROPEAN PATENT APPLICATION

(11) **EP 4 783 640 A1**
(43) Date of publication of application: **29.07.2026**
(21) Application number: 24881358.6
(22) Date of filing: 26.09.2024
(51) Int. Cl.: H04W 16/28, H04W 24/10

(54) **COMMUNICATION METHOD, DEVICE, STORAGE MEDIUM, AND COMPUTER PROGRAM PRODUCT**

(30) Priority: 26.10.2023 CN 202311398028
(71) Applicant: HUAWEI TECHNOLOGIES CO., LTD., Shenzhen 518129 (CN)
(72) Inventor: WANG, Xiaona, Shenzhen, Guangdong 518129 (CN); LIU, Fengwei, Shenzhen, Guangdong 518129 (CN)
(74) Representative: Pfenning, Meinig & Partner mbB
(86) International application number: PCT/CN2024/121567
(87) International publication number: WO 2025/086992

(57) **Abstract**

A communication method, an apparatus, a storage medium, and a computer program product are provided, and relate to the field of wireless communication technologies, so that a spatial relation configuration solution of a network apparatus is applicable to a multi-beam transmission scenario. In this application, a terminal apparatus receives first information, where the first information includes information indicating indexes of a plurality of resources. The terminal apparatus performs transmission of a first signal, where a spatial relation of the first signal is associated with a spatial relation of the plurality of resources. Because the first information received by the terminal apparatus indicates the plurality of resources, the terminal apparatus may perform transmission of the first signal based on an indication of second information by using the spatial relation of the plurality of resources. According to the solution provided in this application, a spatial relation configuration problem in the multi-beam transmission scenario can be resolved.

## Description

### CROSS-REFERENCE TO RELATED APPLICATIONS

This application claims priority to Chinese Patent Application No. 202311398028.0, filed with the China National Intellectual Property Administration on October 26, 2023 and entitled "COMMUNICATION METHOD, APPARATUS, STORAGE MEDIUM, AND COMPUTER PROGRAM PRODUCT", which is incorporated herein by reference in its entirety.

### TECHNICAL FIELD

This application relates to the field of wireless communication technologies, and in particular, to a communication method, an apparatus, a storage medium, and a computer program product.

### BACKGROUND

To overcome the severe path loss of high-frequency millimeter waves, array techniques can be used between a network device and a terminal device to form directional beams with high gains for communication, thereby increasing antenna gains, compensating for path loss. Before the directional beams are used for communication, beam training needs to be performed between the network device and the terminal device, to implement beam alignment.

A current beam training process includes: A network device configures a plurality of pilot resources for a terminal device, the network device sends pilot signals on the plurality of pilot resources, and the terminal device measures the pilot signals on these pilot resources, and reports, to the network device, first 1 to 4 pilot resources with optimal measurement results. Then, the network device may select, based on these measurement results reported by the terminal device, a specific pilot resource as a reference signal associated with a transmission configuration indicator state (transmission configuration indicator state, TCI-state) or a spatial relation (spatial relation), and configure the pilot resource for the terminal device. The network device performs downlink transmission and/or uplink transmission on the pilot resource, where the pilot resource is also used to guide the terminal device to perform uplink transmission and/or downlink transmission.

However, in some current scenarios (for example, "low frequency band" scenarios), the network device performs downlink transmission and/or uplink transmission based on a plurality of beams. However, current spatial relation configuration solutions cannot match these scenarios.

### SUMMARY

Embodiments of this application provide a communication method, an apparatus, a storage medium, and a computer program product, so that a spatial relation configuration solution of a network apparatus is applicable to a multi-beam transmission scenario.

According to a first aspect, this application provides a communication method. The method is performed by a terminal apparatus. The terminal apparatus may be a terminal device, or may be a chip inside the terminal device.

In this application, the terminal apparatus receives first information, where the first information includes information indicating indexes of a plurality of resources. The terminal apparatus performs transmission of a first signal, where a spatial relation of the first signal is associated with a spatial relation of the plurality of resources.

Because the first information received by the terminal apparatus indicates the plurality of resources, the terminal apparatus may perform transmission of the first signal based on an indication of second information by using the spatial relation of the plurality of resources. According to the solution provided in this application, a spatial relation configuration problem in a multi-beam transmission scenario can be resolved.

In a possible implementation, the terminal apparatus receives the second information, where the second information includes resource configuration information, and the plurality of resources belong to resources indicated by the resource configuration information. The terminal apparatus sends third information, where the third information includes at least one measurement result, the at least one measurement result is obtained by measuring a reference signal corresponding to the resource indicated by the resource configuration information, and one measurement result among the at least one measurement result is associated with at least one resource indicated by the resource configuration information.

Because a network apparatus configures the resource for the terminal apparatus by using the resource configuration information, the terminal apparatus may measure, based on the resource configuration information, the reference signal on the resource configured by the network apparatus. In addition, because the terminal apparatus sends the third information, the network apparatus may select, based on the measurement result, a resource with better channel quality, to improve subsequent communication quality.

In a possible implementation, the third information further includes a resource index associated with one or more measurement results in the at least one measurement result. The third information may include resource indexes associated with all measurement results in the at least one measurement result, or the third information may include resource indexes associated with a part of measurement results in the at least one measurement result. One measurement result may be associated with one or more resource indexes. One measurement result may be obtained by the terminal apparatus by measuring a reference signal on a resource corresponding to the resource index associated with the measurement result. In this way, the network apparatus may determine a resource index associated with a measurement result with better channel quality, and then assist the terminal apparatus in subsequent signal transmission.

In a possible implementation, two measurement results among the at least one measurement result are associated with different quantities of resource indexes or a same quantity of resource indexes. In a possible implementation, resource indexes associated with two measurement results among the at least one measurement result have no intersection or have an intersection, so that solution flexibility can be improved.

The first information may indicate the index of the resource in a plurality of manners. In a possible implementation, the first information includes indexes of the plurality of resources. In another possible implementation, the first information may include some indication information, and the indication information may indicate the resource index. The following uses several examples for description.

In an example 1, the information indicating the indexes of the plurality of resources includes information indicating a resource quantity K1. Resource indexes associated with the resource quantity K1 are indexes of K1 resources associated with a first measurement result in the third information. The first measurement result is a measurement result, associated with the K1 resources, among the at least one measurement result. K1 may be a positive integer. In a possible implementation, K1 may be an integer greater than 1.

In a possible implementation, the at least one measurement result includes a plurality of measurement results, and two measurement results among the plurality of measurement results are associated with different resources quantities. In this way, the terminal apparatus may determine, based on a resource quantity, a measurement result associated with the resource quantity, and then determine a resource index corresponding to the measurement result. In this solution, a quantity of bits occupied by signaling can be reduced.

In an example 2, the information indicating the indexes of the plurality of resources includes information indicating a measurement result index K2. A measurement result indicated by the measurement result index K2 belongs to the at least one measurement result, and the measurement result index K2 is associated with the plurality of resources.

In a possible implementation, the measurement result index K2 is a (K2)^{th} measurement result in the at least one measurement result in the third information. K2 may be a positive integer.

In a possible implementation, the at least one measurement result includes a plurality of measurement results, and two measurement results among the plurality of measurement results are associated with a same resource quantity. There are a plurality of resources associated with a measurement result in the two measurement results. In this way, the terminal apparatus may determine a corresponding measurement result by using a measurement result index, and then determine, based on a correspondence between the measurement result and the resource index in the third information, a resource index corresponding to the measurement result. In this solution, a quantity of bits occupied by signaling can be reduced.

In another possible implementation, the at least one measurement result in the third information is associated with M1 resources in the resource configured by the resource configuration information, and M1 is an integer greater than 1. The M1 resources correspond to a plurality of resource groups, and one measurement result among the at least one measurement result is associated with one resource group in at least one resource group. The plurality of resource groups include a resource group formed by resource combinations obtained by selecting K0 resources from the M1 resources. K0 is an integer greater than 1. It may also be understood that one resource group includes K0 resources in the M1 resources. In another possible implementation, the measurement result in the third information corresponds to all combinations of the M1 resources. There may be a correspondence between the measurement result and the resource group, and the network apparatus may determine, based on the correspondence, a resource group corresponding to each measurement result. The network apparatus may also enable the terminal apparatus to determine a corresponding resource index by indicating the resource group index. In this solution, a quantity of bits occupied by signaling can be reduced.

In an example 3, the information indicating the indexes of the plurality of resources includes information indicating a resource group index K3. A resource group corresponding to the resource group index K3 includes the plurality of resources.

In a possible implementation, the at least one measurement result includes a plurality of measurement results. A resource index associated with the resource group index K3 is indexes of at least two resources included in the resource group corresponding to the resource group index K3. There is a correspondence between the resource group index K3 and the plurality of resources associated with the plurality of measurement results. The correspondence may be preset or indicated by the network apparatus.

In a possible implementation, when the information indicating the indexes of the plurality of resources includes the information indicating the resource group index K3, one measurement result among the at least one measurement result in the third information is associated with one resource in the third information. For example, the third information includes the plurality of measurement results and the plurality of resources, and the plurality of measurement results may be in a one-to-one correspondence with the plurality of resources. The network apparatus indicates the plurality of resources to the terminal apparatus based on the measurement result. In a possible implementation, the network apparatus may indicate the indexes of the plurality of resources to the terminal apparatus. To further reduce signaling overheads, the network apparatus and the terminal apparatus may agree on an index of the resource group. In this way, the network apparatus may indicate the resource group index K3 to the terminal apparatus, and then the terminal apparatus may determine, based on a pre-agreed correspondence between the resource group index and the resource group, the resource group corresponding to the resource group index K3, determine, from the plurality of resources in the third information, the resource group corresponding to the resource group index K3, and then obtain the index of the resource included in the resource group.

For example, the third information includes a resource #0, a resource #1, and a resource #2. It is pre-agreed that a resource group corresponding to a resource group index #0 is a combination of a 1^{st} resource and a 2^{nd} resource, namely, the resource #0 and the resource #1; a resource group corresponding to a resource group index #1 is a combination of the 1^{st} resource and a 3^{rd} resource, namely, the resource #0 and the resource #2; and a resource group corresponding to a resource group index #2 is a combination of the 2^{nd} resource and the 3^{rd} resource, namely, the resource #1 and the resource #2. When the network apparatus indicates the resource group index #0, the terminal apparatus determines, based on the resource index reported in the third information, that resources corresponding to the resource group index #0 are the resource #0 and the resource #1. In this way, signaling overheads can be reduced.

In another possible implementation, an implementation in which the first information includes the indexes of the plurality of resources may be used in combination with the implementations provided in Example 1 to Example 3. For example, the information indicating the indexes of the plurality of resources includes the indexes of the plurality of resources and a plurality of items of content in any plurality of implementations in Example 1 to Example 3. For related content, refer to the foregoing descriptions. Details are not described again.

In a possible implementation, the at least one measurement result includes a first measurement result and a second measurement result. The first measurement result is obtained by the terminal apparatus by measuring a reference signal, on a resource indicated by a resource index associated with the first measurement result, received by at least one first antenna port. The second measurement result is obtained by the terminal apparatus by measuring a reference signal, on a resource indicated by a resource index associated with the second measurement result, received by at least one second antenna port. The at least one first antenna port is different from the at least one second antenna port. In a possible implementation, there is no intersection set between the at least one first antenna port and the at least one second antenna port, that is, no port between the at least one first antenna port and the at least one second antenna port is the same. In another possible implementation, there is an intersection set between the at least one first antenna port and the at least one second antenna port, but the at least one first antenna port is different from all second antenna ports or the at least one second antenna port is different from all first antenna ports. The two measurement results obtained by the terminal apparatus may reflect a difference in quality of signal transmission performed between different antenna ports. In this solution, a granularity of signal transmission may be set to an antenna port level, so that the terminal apparatus can subsequently use a better antenna port to perform signal transmission.

In a possible implementation, the resource indexes associated with the first measurement result and the second measurement result are the same or different.

According to a second aspect, this application provides a communication method. The method is performed by a network apparatus. The terminal apparatus may be a network device (for example, may be an access network device), or may be a unit, a module, or a chip inside the network device (for example, may be a chip inside the access network device).

In this application, the network apparatus sends first information, where the first information includes information indicating indexes of a plurality of resources. The network apparatus performs transmission of a first signal, where a spatial relation of the first signal is associated with a spatial relation of the plurality of resources.

Because the first information received by the terminal apparatus indicates the plurality of resources, the spatial relation of the first signal may be associated with the spatial relation of the plurality of resources subsequently, that is, the terminal apparatus may perform transmission of the first signal based on an indication of second information by using the spatial relation of the plurality of resources. According to the solution provided in this application, a spatial relation configuration problem in a multi-beam transmission scenario can be resolved.

In a possible implementation, the network apparatus sends second information, where the second information includes resource configuration information, and the plurality of resources belong to resources indicated by the resource configuration information. The network apparatus receives third information, where the third information includes at least one measurement result, and the at least one measurement result is obtained by measuring a reference signal corresponding to the resource indicated by the resource configuration information. One measurement result among the at least one measurement result is associated with the at least one resource indicated by the resource configuration information. For beneficial effect, refer to related content in the first aspect. Details are not described again.

For related descriptions and beneficial effect of the first information and the third information, refer to related content in the first aspect. Details are not described again.

According to a third aspect, a communication apparatus is provided. The communication apparatus may be the foregoing terminal apparatus or network apparatus. The communication apparatus may include a communication unit and a processing unit, to perform any one of the first aspect and the second aspect or any possible implementation of the first aspect and the second aspect. The communication unit is configured to perform sending and receiving related functions. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus further includes modules that can be configured to perform any one of the first aspect and the second aspect or any possible implementation of the first aspect and the second aspect.

According to a fourth aspect, a communication apparatus is provided. The communication apparatus may be the foregoing terminal apparatus or network apparatus. The communication apparatus may include a processor and a memory, to perform any one of the first aspect and the second aspect or any possible implementation of the first aspect and the second aspect. Optionally, the communication apparatus further includes a transceiver. The memory is configured to store a computer program or instructions. The processor is configured to invoke the computer program or the instructions from the memory and run the computer program or the instructions. When the processor runs the computer program or the instructions in the memory, the communication apparatus is enabled to perform any one of the first aspect and the second aspect or any possible implementation of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, a communication apparatus is provided. The communication apparatus may be the foregoing terminal apparatus or network apparatus. The communication apparatus may include a processor, to perform any one of the first aspect and the second aspect or any possible implementation of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is a terminal apparatus or a network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided. The system includes the foregoing terminal apparatus.

In a possible implementation, the system may further include a network apparatus.

According to a seventh aspect, a computer program product is provided. The computer program product includes a computer program (which may also be referred to as code or instructions). When the computer program is run, a computer is enabled to perform any one of the first aspect and the second aspect or any possible implementation of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform any one of the first aspect and the second aspect or any possible implementation of the first aspect and the second aspect.

According to a ninth aspect, a processing apparatus is provided. The processing apparatus includes an interface circuit and a processing circuit. The interface circuit may include an input circuit and an output circuit. The processing circuit is configured to: receive a signal through the input circuit, and transmit a signal through the output circuit, so that any one of the first aspect and the second aspect or any possible implementation of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a terminal apparatus or a network apparatus, the interface circuit may be a radio frequency processing chip in the terminal apparatus or the network apparatus, and the processing circuit may be a baseband processing chip in the terminal apparatus or the network apparatus.

In another implementation, the communication apparatus may be some components in the terminal apparatus or the network apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2 is a possible schematic flowchart of a communication method according to an embodiment of this application;
FIG. 3 is a diagram of a structure of a communication apparatus according to an embodiment of this application; and
FIG. 4 is a diagram of another structure of a communication apparatus according to an embodiment of this application.

### DESCRIPTION OF EMBODIMENTS

Before this application is described, some terms in embodiments of this application are first briefly explained and described, to facilitate understanding of a person skilled in the art.

### (1) Reference signal

In embodiments of this application, the reference signal may include a channel state information (channel state information reference signal, CSI) reference signal (reference signal, RS), a synchronization signal block (synchronization signal block, SSB), a sounding reference signal (sounding reference signal, SRS), a demodulation reference signal (demodulation reference signal, DMRS), a tracking reference signal (tracking reference signal, TRS), a phase tracking reference signal (phase tracking reference signal, PTRS), a cell reference signal (cell reference signal, CRS), or the like.

### (2) Resource

In embodiments of this application, a network apparatus may configure a resource set/or a resource for a terminal apparatus.

The resource set may include at least one of a CSI synchronization signal block (CSI synchronization signal block, CSI-SSB) resource set, a CSI interference measurement (CSI interference measurement, CSI-IM) resource set, a non-zero power-channel state information reference signal (non-zero power-channel state information reference signal, NZP-CSI-RS) resource set, or a zero power-channel state information reference signal (zero power-channel state information reference signal, ZP-CSI-RS) resource set.

The resource may include at least one of a CSI-SSB resource, a CSI-IM resource, an NZP-CSI-RS resource, a ZP-CSI-RS resource, an SRS resource, a DMRS resource, a PTRS resource, a CRS resource, or a TRS resource. In embodiments of this application, an example in which the resource is a channel state information reference signal (channel state information reference signal, CSI-RS) resource is used for description. The CSI-RS resource is also written as a CSIRS resource in this specification, and the CSIRS resource may also be replaced with another resource.

### (3) Beam

In the new radio (new radio, NR) protocol, the beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (TCI-state) parameter, or may be indicated by using a spatial relation parameter.

Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (a downlink TCI-state and an uplink TCI-state), a spatial relation, or the like. The foregoing terms are also equivalent to each other. Alternatively, the beam may be replaced with another term for indicating the beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation, an uplink TCI-state, or an SRS resource (which indicates that a transmission beam of an SRS is used). Therefore, the uplink beam may alternatively be replaced with the SRS resource.

The transmission beam may be spatial distribution of signal strength formed in different directions after a signal is transmitted through an antenna, and the reception beam may be spatial distribution of signal strength, in different directions, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (Downlink control information, DCI).

Optionally, a plurality of beams having same or similar communication features are considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of the resource may uniquely identify a beam corresponding to the resource.

### (4) TCI-state (indicating a downlink beam)

The network device may generate different beams that point to different transmission directions. In downlink data transmission, when sending data to the terminal device through a specified beam, the network device needs to notify the terminal device of information about the transmission beam used by the network device. In this way, the terminal device can receive, through a reception beam corresponding to the transmission beam, the data sent by the network device.

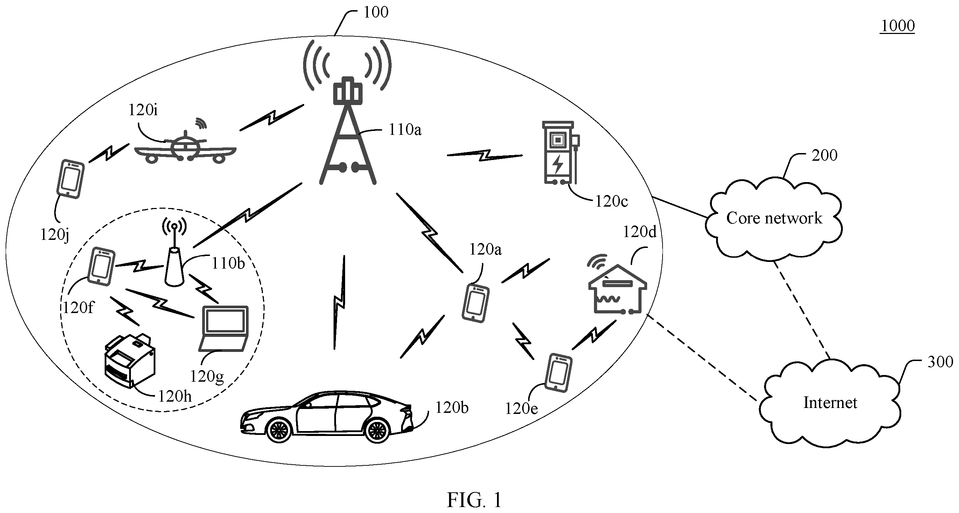

In the 3GPP R15/R16 protocol, the network device indicates, to the terminal device by using the TCI field in the DCI, related information of the transmission beam used by the terminal device. Specifically, a size of the TCI field is three bits, and may specifically indicate eight different field values (codepoints). Each value of the TCI field corresponds to one TCI-state index, and the TCI-state index may uniquely identify one TCI-state. The TCI-state includes several parameters, and the related information of the transmission beam may be determined by using these parameters. The TCI-state is configured by the network device for each terminal device. A structure of the TCI-state is shown in FIG. 1. Each TCI-state includes an index TCI-state identity of the TCI-state and two pieces of QCL information (QCL information, QCL-Info). Each piece of QCL-Info includes one cell field and one BWP-ID, respectively indicating a specific BWP (Bandwidth part) of a specific cell (cell) to which the TCI-state is applied, that is, different QCL-Info may be configured for different BWPs of different cells or a same cell. The QCL-Info further includes one reference signal (reference signal), indicating a specific reference signal resource with which a QCL (quasi-co-location, quasi-co-location) relationship is formed.

In the R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, a specific reference signal resource with which a QCL relationship is formed herein essentially means a specific beam with which a QCL relationship is formed. The QCL relationship means that two reference signal resources (or two antenna ports, where antenna ports and reference signal resources are also in a one-to-one correspondence) have some same spatial parameters. Specifically, specific spatial parameters that are the same depends on a type of the QCL-Info, namely, another field qcl-Type of the QCL-Info. qcl-Type may have four values {typeA, typeB, typeC, typeD}. TypeD is used as an example. TypeD indicates that the two reference signal resources have same spatial reception parameter information. That is, two beams have a same reception beam. A maximum of one of the two pieces of QCL-Info included in the TCI-state can be of TypeD.

### (5) Spatial relation (spatial relation) (indicating an uplink beam)

In the current protocol, a transmission beam for uplink transmission is indicated by the spatial relation, and a function of the spatial relation is similar to that of the TCI-state, and notifies the terminal device of a specific transmission beam to be used for uplink transmission.

The spatial relation also needs to be first configured by using radio resource control (radio resource control, RRC) signaling. The RRC signaling may include an ID of the spatial relation, a cell ID, a target reference signal resource, a path loss measurement reference signal, a power control parameter, or the like. The target reference signal resource (which may be one of an SRS/an SSB/a CSI-RS) indicates the corresponding uplink beam. If a spatial relation #1 is used for uplink transmission, and the spatial relation #1 includes one target reference signal resource #2, it indicates that a transmission beam used for uplink transmission is a transmission/reception beam of the target reference signal . For example, when the target reference signal resource is an uplink resource SRS, it indicates that the transmission beam used for uplink transmission is a transmission beam of the SRS (where the transmission beam of the SRS is known). For another example, when the target reference signal resource is a downlink resource such as an SSB/a CSI-RS, it indicates that the transmission beam used for uplink transmission is a reception beam of the SSB/the CSI-RS (where the reception beam of the SSB/CSI-RS is known).

The network device may configure a plurality of spatial relations for the terminal device. Then, one of the spatial relations is activated for corresponding data transmission through a medium access control control element (medium access control control element, MAC CE). Uplink transmission includes a physical uplink control channel (physical uplink control channel, PUCCH), an SRS, a physical uplink shared channel (physical uplink shared channel, PUSCH), and the like, and all of them require corresponding spatial relations. The spatial relation of the PUCCH is indicated by using MAC CE signaling. The spatial relation of the SRS is also indicated by using the MAC CE signaling. During PUSCH transmission, a specific SRS is associated, and transmission is performed by using the spatial relation of the SRS.

### (6) Antenna port and antenna port group

The antenna port may be a physical antenna, an antenna port (for example, an antenna port), a pilot antenna port (for example, a CSI-RS antenna port, an SRS antenna port, a DMRS antenna port, a PTRS antenna port, a CRS antenna port, a TRS antenna port, or an SSB antenna port), a reference signal antenna port, or a virtual antenna port. The antenna port may be divided into a reception antenna port and a transmission antenna port. One antenna port may correspond to one physical antenna or a group of physical antennas, and different antenna ports may be different beams corresponding to a same physical antenna, or correspond to different physical antennas, or correspond to a part of same physical antennas. The antenna port may be an antenna port of the network device, or may be an antenna port of the terminal device.

In a protocol, the antenna port is usually represented by an antenna port or a port, or may be represented by a resource (for example, a CSI-RS resource, an SRS resource, a DMRS resource, a PTRS resource, a CRS resource, a TRS resource, or an SSB resource) or a resource group. In other words, an identity of the antenna port in this application may be replaced with an identity of the foregoing content. For example, the antenna port may be replaced with an identity of the resource, an identity of the pilot resource, an identity of the reference signal resource, or the like.

One antenna port group includes one or more antenna ports, and usually corresponds to one resource or resource group. One resource group includes one or more resources. The network device may configure one or more antenna ports or antenna port groups for the terminal device. Downlink data may be sent by the network device through one or more antenna ports, and received by the terminal device based on the one or more antenna ports. Uplink data may be sent by the terminal device through one or more antenna ports, and received by the network device based on the one or more antenna ports.

The antenna port group in embodiments of this application may include one or more antenna ports. A concept of the antenna port group may also be replaced with another name, for example, a resource group, a pilot resource group, a reference signal resource group, an antenna port set, or an antenna port set. This is not limited in embodiments of this application.

FIG. 1 is an example of a diagram of an architecture of a communication system 1000 to which an embodiment of this application is applicable. FIG. 1 is a diagram of an architecture of a communication system 1000 to which an embodiment of this application is applicable. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may further include the foregoing two or more different radio access systems. The RAN 100 may also be an open RAN (open RAN, O-RAN).

The network device in embodiments of this application may be a RAN node. The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of the radio resource control protocol and a packet data convergence protocol (packet data convergence protocol, PDCP) layer of the base station, and may further complete functions of the service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The CU-CP may also be referred to as an O-CU-CP, and the CU-UP may also be referred to as an O-CUP-UP. The RAN node in embodiments of this application may be implemented through a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j accessing the radio access network 100 through 120i, the terminal 120i is a base station. However, for the base station 110a, 120i is a terminal. In other words, communication between 110a and 120i is performed according to the radio air interface protocol. Certainly, communication between 110a and 120i may alternatively be performed according to the interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between a base station and a terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, for example, a smart grid, industrial control, smart transportation, and a smart city. The function of the terminal may alternatively be performed by a module (for example, a chip or a modem) in the terminal, or may be performed by an apparatus having the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The access network device may include a central unit (central unit, CU) and a distributed unit (distributed unit, DU). This design may be referred to as CU and DU separation. A plurality of DUs may be centrally controlled by one CU. For example, an interface between the CU and the DU is referred to as an F1 interface. A control plane (control panel, CP) interface may be F1-C, and a user plane (user panel, UP) interface may be F1-U. A specific name of each interface is not limited in embodiments of this application. The CU and the DU may be divided based on a protocol layer of a wireless network. For example, functions of a PDCP layer and a protocol layer (for example, an RRC layer and an SDAP layer) above the PDCP layer are set in the CU, and functions of a protocol layer (for example, an RLC layer, a MAC layer, and a PHY layer) below the PDCP layer are set in the DU. For another example, the functions of the protocol layer above the PDCP layer are set in the CU, and the functions of the protocol layer below the PDCP layer are set in the DU. This is not limited.

The division into processing functions of the CU and the DU based on protocol layers is merely an example, and may also be division in another manner. For example, the CU or the DU may have functions of more protocol layers through division. For another example, the CU or the DU may have a part of processing functions of the protocol layers through division. For example, a part of functions of the RLC layer and functions of a protocol layer above the RLC layer are set in the CU, and remaining functions of the RLC layer and functions of a protocol layer below the RLC layer are set in the DU. For another example, division into functions of the CU or the DU may alternatively be performed based on service types or other system requirements. For example, division may be performed based on latencies. Functions whose processing time needs to satisfy a latency requirement are set in the DU, and functions whose processing time does not need to satisfy the latency requirement are set in the CU.

Optionally, the CU may have one or more functions of the core network.

Optionally, a radio unit (radio unit, RU) of the DU may be disposed remotely. The RU has a radio frequency function. For example, the DU and the RU may be set at the PHY layer through division. For example, the DU may implement a higher-layer function of the PHY layer, and the RU may implement a lower-layer function of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and a radio frequency sending function. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and a radio frequency sending function. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and a radio frequency receiving function. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and a radio frequency receiving function.

Optionally, the functions of the CU may be further divided, and a control plane and a user plane are separated and implemented through different entities. Separated entities are respectively a control plane CU entity (namely, a CU-CP entity) and a user plane CU entity (namely, a CU-UP entity). The CU-CP entity and the CU-UP entity may be separately connected to the DU. In embodiments of this application, the entity may be understood as a module or a unit, and may exist in a form of a hardware structure, a software module, or a combination of a hardware structure and a software module. This is not limited.

Optionally, any one of the CU, the CU-CP, the CU-UP, the DU, and the RU may be a software module, a hardware structure, or a combination of a software module and a hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

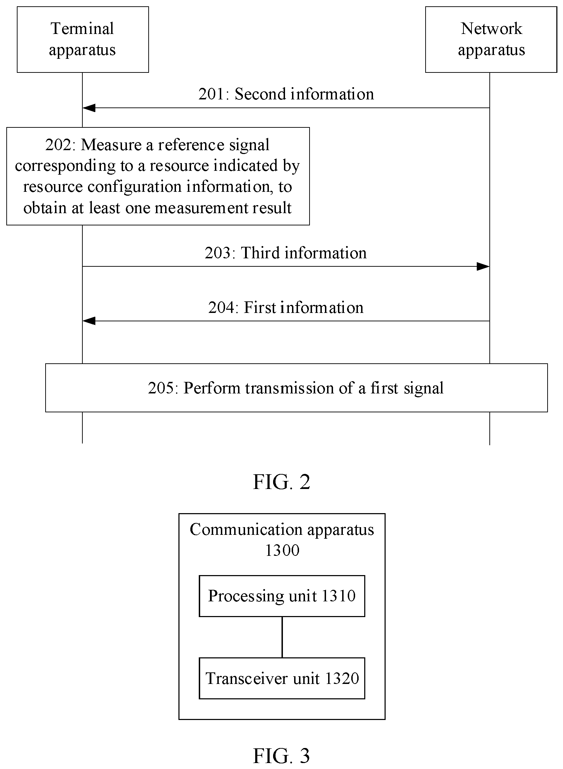

Based on the embodiment shown in FIG. 1, FIG. 2 is an example of a possible schematic flowchart of a communication method according to an embodiment of this application. A terminal apparatus in FIG. 2 may be the terminal device or a chip inside the terminal device shown in FIG. 1. A network apparatus in FIG. 2 may be the network device (for example, the RAN node, such as the CU or the DU) or a chip in the network device (for example, a chip in the RAN node, such as a chip in the CU or the DU) in FIG. 1.

As shown in FIG. 2, the method includes step 204 and step 205. In a possible implementation, the solution may further include step 201, step 202, and step 203. The solution provided in step 201, step 202, and step 203 is an optional implementation, and may not be performed in the implementation shown in FIG. 2. The following provides descriptions with reference to FIG. 2.

Step 201: The network apparatus sends second information.

Correspondingly, the terminal apparatus receives the second information.

The second information in this embodiment of this application may be carried in RRC signaling.

The second information includes resource configuration information, and a plurality of resources belong to resources indicated by the resource configuration information.

In this embodiment of this application, the network apparatus may configure a resource (for example, the resource may be a pilot resource) for the terminal apparatus by using the resource configuration information. The resource may be used for beam management or beam training.

In a possible implementation, the resource configuration information may include an identity (identity, ID) of the resource, or the resource configuration information may include an ID of a resource set and an ID of the resource. For example, the resource configuration information may be used to configure one or more resource sets (resource Sets), and each resource set (resource Set) may include one or more resources (resources). For related descriptions of the resource set and the resource, refer to the foregoing content. Details are not described again. Each resource configured by the resource configuration information includes one or more ports. The port may be understood as a pilot antenna port (for example, a CSI-RS antenna port, an SRS antenna port, a DMRS antenna port, a PTRS antenna port, a CRS antenna port, a TRS antenna port, or an SSB antenna port), a reference signal antenna port, or a virtual antenna port.

Step 202: The terminal apparatus measures a reference signal corresponding to the resource indicated by the resource configuration information, to obtain at least one measurement result.

In step 202, the terminal apparatus may perform receiving measurement on the reference signal by using a physical layer. Step 202 may be performed, for example, by the DU.

In this embodiment of this application, the measurement result may include at least one of a reference signal received power (reference signal received power, RSRP), a signal to interference plus noise ratio (signal to interference plus noise ratio, SINR), a channel rank indicator (rank indicator, RI), a precoding matrix indicator (precoding matrix indicator, PMI), or a channel quality indicator (channels quality indication, CQI). In this embodiment of this application, an example in which the measurement result is the RSRP is used for description.

Further, before measuring the reference signal corresponding to the resource indicated by the resource configuration information, the terminal apparatus may further receive a channel state information report configuration sent by the network apparatus. The channel state information report configuration may indicate a specific measurement solution, a reporting behavior, a measurement-related resource configuration, and the like of the terminal apparatus.

In this embodiment of this application, one port group used by the network apparatus to send the reference signal may correspond to one or more resources. In this embodiment of this application, the resource corresponding to the reference signal may also be understood as a port group or a port corresponding to the reference signal. One port group may include one or more ports. The port may be understood as a pilot antenna port (for example, a CSI-RS antenna port, an SRS antenna port, a DMRS antenna port, a PTRS antenna port, a CRS antenna port, a TRS antenna port, or an SSB antenna port), a reference signal antenna port, or a virtual antenna port.

In step 202, there are a plurality of measurement solutions for the terminal apparatus. The following provides two possible examples in an implementation A1 and an implementation A2 respectively. In the implementation A1, the terminal apparatus may receive the reference signal based on a same reception beam, a same antenna port, or a same reception beam of a same antenna port, and then measure the reference signal. In the implementation A2, the terminal apparatus may receive the reference signal based on different reception beams, different antenna ports, or different reception beams of a same antenna port, and then measure the reference signal.

In the implementation A1, the terminal apparatus may receive the reference signal based on the same reception beam, and then measure the reference signal to obtain the measurement result. In another possible implementation, the terminal apparatus may alternatively receive the reference signal based on the same antenna port, and then measure the reference signal to obtain the measurement result. In still another possible implementation, the terminal apparatus may alternatively receive the reference signal based on the same reception beam of the same antenna port, and then measure the reference signal to obtain the measurement result.

For example, there are four antenna ports on a terminal apparatus side: p1, p2, p3, and p4. The following shows, in Table 1, an example of a correspondence between the measurement result obtained by the terminal apparatus, the resource, and the antenna port of the terminal apparatus.

**Table 1 Example of the correspondence between the measurement result obtained by the terminal apparatus, the resource, and the antenna port of the terminal apparatus**

| Resource corresponding to the reference signal | Antenna port used to receive the reference signal on the terminal apparatus side | Measurement result |
|---|---|---|
| {CSIRS resource #0} | {p1, p2, p3, p4} | RSRP #0 |
| {CSIRS resource #0, CSIRS resource #1} | {p1, p2, p3, p4} | RSRP #1 |
| {CSIRS resource #2, CSIRS resource #3} | {p1, p2, p3, p4} | RSRP #2 |
| ... | {p1, p2, p3, p4} | ... |
| {CSIRS resource #n-1, CSIRS resource #n} | {p1, p2, p3, p4} | RSRP #(n*(n-1)/2) |
| {CSIRS resource #0, CSIRS resource #1, CSIRS resource #2} | {p1, p2, p3, p4} | RSRP #(n*(n-1)/2+1) |
| ... | {p1, p2, p3, p4} | ... |
| {CSIRS resource #n-2, CSIRS resource #n-1, CSIRS resource #n} | {p1, p2, p3, p4} | ... |
| ... | ... | ... |
| {CSIRS resource #0, CSIRS resource #1, ..., CSIRS resource #n} | {p1, p2, p3, p4} | ... |
| ... | ... | ... |

A 2^{nd} row in Table 1 is used as an example for description: The resource corresponding to the reference signal corresponding to the measurement result RSRP #0 is the CSIRS resource #0. The antenna ports, used to receive the reference signal on the terminal apparatus side, corresponding to the measurement result RSRP #0 are {p1, p2, p3, p4}. Content in this row may be understood as follows: The terminal apparatus measures the reference signal that is sent by the network apparatus on the CSIRS resource #0 and that is received by the antenna ports {p1, p2, p3, p4}, to obtain the RSRP #0. Alternatively, the content in this row may also be understood as follows: A received energy value (where the received energy value may be understood as the RSRP #0) of the reference signal that is indicated by the network apparatus by using the pilot antenna port group CSIRS resource #0 and that is received by the terminal apparatus based on the antenna ports {p1, p2, p3, p4}. The pilot antenna port group CSIRS resource #0 may also be understood as a pilot antenna port group corresponding to the CSIRS resource #0, or may be understood as that the network apparatus sends the reference signal on the CSIRS resource #0 by using the pilot antenna port group.

Similarly, content in a 3^{rd} row in Table 1 may be understood as follows: The terminal apparatus measures the reference signal that is sent by the network apparatus on the CSIRS resource #0 and the CSIRS resource #1 and that is received by the antenna ports {p1, p2, p3, p4}, to obtain the RSRP #1.

In this embodiment of this application, when one measurement result corresponds to reference signals on a plurality of resources, the measurement result may be obtained by the terminal apparatus by directly measuring the reference signals on the plurality of resources. Alternatively, the terminal apparatus may separately measure a reference signal on each of a plurality of resources, then calculate a plurality of obtained measurement results (for example, calculate an average value or a weighted average value), and use a calculation result as a measurement result corresponding to the reference signal on the plurality of resources.

Similarly, content in a 6^{th} row may be understood as follows: The terminal apparatus measures the reference signal that is sent by the network apparatus on the CSIRS resource #n-1 and the CSIRS resource #n and that is received by the antenna ports {p1, p2, p3, p4}, to obtain the RSRP #(n*(n-1)/2). Content in another row is similar to this. Details are not described again.

In this embodiment of this application, the terminal apparatus may obtain a plurality of measurement results. One of the plurality of measurement results may be obtained by the terminal apparatus by measuring a reference signal on a single resource, and another one of the plurality of measurement results may be obtained by the terminal apparatus by measuring reference signals on a plurality of resources. Quantities of resources corresponding to two of the plurality of measurement results may be the same or may be different. In another possible implementation, each of the plurality of measurement results is obtained by measuring a reference signal transmitted on a single resource. In still another possible implementation, each of the plurality of measurement results is obtained by measuring reference signals transmitted on a plurality of resources, quantities of resources corresponding to any two measurement results may be the same or different, and resources corresponding to the any two measurement results may have an intersection set or may not have an intersection set. For example, the terminal apparatus may measure the reference signal on the CSIRS resource #0 to obtain the RSRP #0, and may further measure the reference signal on the CSIRS resource #0 and the CSIRS resource #1 to obtain the RSRP #1. In an example provided in Table 1, during actual application, the correspondence between the measurement result obtained by the terminal apparatus, the resource, and the antenna port of the terminal apparatus may be a part of the content in Table 1, or may include content that is not shown in Table 1.

In the example in Table 1, a possible example in which the terminal apparatus receives different reference signals based on a same antenna port is described. In another possible implementation, the terminal apparatus may receive the reference signal based on the same reception beam, and then measure the reference signal. In this implementation, the antenna ports that are used to receive the reference signal on the terminal apparatus side and that are in the 2^{nd} column in Table 1 may be replaced with reception beams. For example, {p1, p2, p3, p4} in the 2^{nd} column in Table 1 are uniformly replaced with {reception beam #1, reception beam #2, reception beam #3, reception beam #4}. Other content is similar to that in the example in Table 1 above. Details are not described again.

In another possible implementation, the terminal apparatus may alternatively receive the reference signal based on the same reception beam of the same antenna port, and then measure the reference signal. In this implementation, the antenna ports that are used to receive the reference signal on the terminal apparatus side and that are in the 2^{nd} column in Table 1 may be replaced with antenna ports and reception beams used to receive the reference signal on the terminal apparatus side. For example, {p1, p2, p3, p4} in the 2^{nd} column in Table 1 are uniformly replaced with the antenna ports {p1, p2, p3, p4} and reception beams {reception beam #1, reception beam #2, reception beam #3, reception beam #4}. Other content is similar to that in the example in Table 1 above. Details are not described again.

It may be learned from the implementation A1.1 that in this implementation, the terminal apparatus may receive the reference signal on the single resource or the plurality of resources based on the same reception beam, the same antenna port, or the same reception beam of the same antenna port, and then measure the reference signal to obtain the measurement result. One measurement result is obtained by the terminal apparatus by measuring the reference signal on the single resource or the plurality of resources. In this solution, the measurement result obtained by the terminal apparatus may more accurately reflect communication quality corresponding to a reference signal transmitted on each resource combination (where one resource group may include one or more resources).

In the implementation A2, the terminal apparatus may receive the reference signal based on the different reception beams, and then measure the reference signal to obtain the measurement result. In another possible implementation, the terminal apparatus may alternatively receive the reference signal based on the different antenna ports, and then measure the reference signal to obtain the measurement result. In still another possible implementation, the terminal apparatus may alternatively receive the reference signal based on the different reception beams of the same antenna port, and then measure the reference signal to obtain the measurement result.

In this embodiment of this application, one measurement result may be obtained by the terminal apparatus by measuring a reference signal transmitted on one or more resources. Resources corresponding to two measurement results may be the same or different. There may be one or more antenna ports corresponding to the two measurement results. When the resources corresponding to the two measurement results are the same, antenna ports corresponding to the two measurement results may not have an intersection set, or may have a part of intersection sets.

The following describes several possible examples by using Table 2, Table 3, Table 4, and Table 5.

Refer to Table 2. The terminal apparatus in Table 2 separately measures a reference signal that is transmitted on a same resource and that is received by different antenna ports, to obtain a plurality of measurement results. A 2^{nd} row in Table 2 may be understood as follows: The terminal apparatus measures a reference signal that is sent by the network apparatus on a CSIRS resource #0 and that is received by an antenna port p1, to obtain an RSRP #0. Content in another row is similar to this. Details are not described again. According to the example provided in Table 2, two measurement results obtained by the terminal apparatus may reflect a difference in quality of signal transmission performed between different antenna ports. In this solution, a granularity of signal transmission may be set to an antenna port level, so that the terminal apparatus can subsequently use a better antenna port to perform signal transmission.

**Table 2 Example of a correspondence between the measurement result obtained by the terminal apparatus, the resource, and the antenna port of the terminal apparatus**

| Resource corresponding to the reference signal | Antenna port used to receive the reference signal on the terminal apparatus side | Measurement result |
|---|---|---|
| CSIRS resource #0 | p1 | RSRP #0 |
| CSIRS resource #0 | p2 | RSRP #1 |
| CSIRS resource #0 | p3 | RSRP #2 |
| CSIRS resource #0 | p4 | RSRP #3 |
| CSIRS resource #1 | p1 | RSRP #4 |
| CSIRS resource #1 | p2 | RSRP #5 |
| CSIRS resource #1 | p3 | RSRP #6 |
| CSIRS resource #1 | p4 | RSRP #7 |
| ... | ... | ... |

Refer to Table 3. The terminal apparatus in Table 3 separately measures a reference signal that is transmitted on a same resource group (where one resource group may include one or more resources) and that is received by different antenna ports, to obtain a plurality of measurement results. A 2^{nd} row in Table 3 may be understood as follows: The terminal apparatus measures a reference signal that is sent by the network apparatus on a CSIRS resource #0 and a CSIRS resource #1 and that is received by an antenna port p1, to obtain an RSRP #0. Content in another row is similar to this. Details are not described again. According to the example provided in Table 3, two measurement results obtained by the terminal apparatus may reflect a difference in quality of signal transmission performed, based on a plurality of resources, between different antenna ports. In this solution, a granularity of signal transmission may be set to an antenna port level, so that the terminal apparatus can subsequently use a better antenna port to perform signal transmission.

**Table 3 Example of a correspondence between the measurement result obtained by the terminal apparatus, the resource, and the antenna port of the terminal apparatus**

| Resource corresponding to the reference signal | Antenna port used to receive the reference signal on the terminal apparatus side | Measurement result |
|---|---|---|
| {CSIRS resource #0, CSIRS resource #1} | p1 | RSRP #0 |
| {CSIRS resource #0, CSIRS resource #1} | p2 | RSRP #1 |
| {CSIRS resource #0, CSIRS resource #1} | p3 | RSRP #2 |
| {CSIRS resource #0, CSIRS resource #1} | p4 | RSRP #3 |
| {CSIRS resource #2, CSIRS resource #3} | p1 | RSRP #4 |
| {CSIRS resource #2, CSIRS resource #3} | p2 | RSRP #5 |
| {CSIRS resource #2, CSIRS resource #3} | p3 | RSRP #6 |
| {CSIRS resource #2, CSIRS resource #3} | p4 | RSRP #7 |
| ... | ... | ... |

Refer to Table 4. The terminal apparatus in Table 4 separately measures a reference signal that is transmitted on a same resource and that is received by different antenna port groups (where one antenna port group may include one or more antenna ports), to obtain a plurality of measurement results. A 2^{nd} row in Table 4 may be understood as follows: The terminal apparatus measures a reference signal that is sent by the network apparatus on a CSIRS resource #0 and that is received by antenna ports p1 and p2, to obtain an RSRP #0. Content in another row is similar to this. Details are not described again. According to the example provided in Table 4, two measurement results obtained by the terminal apparatus may reflect a difference in signal transmission quality between different antenna port groups. In this solution, a granularity of signal transmission may be set to an antenna port group level, so that the terminal apparatus can subsequently use a better antenna port group to perform signal transmission.

**Table 4 Example of a correspondence between the measurement result obtained by the terminal apparatus, the resource, and the antenna port of the terminal apparatus**

| Resource corresponding to the reference signal | Antenna port used to receive the reference signal on the terminal apparatus side | Measurement result |
|---|---|---|
| CSIRS resource #0 | {p1, p2} | RSRP #0 |
| CSIRS resource #0 | {p3, p4} | RSRP #1 |
| CSIRS resource #0 | {p1, p3} | RSRP #2 |
| CSIRS resource #0 | {p1, p4} | RSRP #3 |
| CSIRS resource #0 | {p2, p3} | RSRP #4 |
| CSIRS resource #0 | {p2, p4} | RSRP #5 |
| CSIRS resource #1 | {p1, p2} | RSRP #6 |
| CSIRS resource #1 | {p3, p4} | RSRP #7 |
| ... | ... | ... |

Refer to Table 5. The terminal apparatus in Table 5 separately measures a reference signal that is transmitted on a same resource group (where one resource group may include one or more resources) and that is received by different antenna port groups (where one antenna port group may include one or more antenna ports), to obtain a plurality of measurement results. A 2^{nd} row in Table 5 may be understood as follows: The terminal apparatus measures a reference signal that is sent by the network apparatus on a CSIRS resource #0 and a CSIRS resource #1 and that is received by antenna ports p1 and p2, to obtain an RSRP #0. Content in another row is similar to this. Details are not described again. According to the example provided in Table 5, two measurement results obtained by the terminal apparatus may reflect a difference in quality of signal transmission performed, based on a plurality of resources, between different antenna port groups. In this solution, a granularity of signal transmission may be set to an antenna port level, so that the terminal apparatus can subsequently use a better antenna port to perform signal transmission.

**Table 5 Example of a correspondence between the measurement result obtained by the terminal apparatus, the resource, and the antenna port of the terminal apparatus**

| Resource corresponding to the reference signal | Antenna port used to receive the reference signal on the terminal apparatus side | Measurement result |
|---|---|---|
| {CSIRS resource #0, CSIRS resource #1} | {p1, p2} | RSRP #0 |
| {CSIRS resource #0, CSIRS resource #1} | {p3, p4} | RSRP #1 |
| {CSIRS resource #0, CSIRS resource #1} | {p1, p3} | RSRP #2 |
| {CSIRS resource #0, CSIRS resource #1} | {p1, p4} | RSRP #3 |
| {CSIRS resource #0, CSIRS resource #1} | {p2, p3} | RSRP #4 |
| {CSIRS resource #0, CSIRS resource #1} | {p2, p4} | RSRP #5 |
| {CSIRS resource #2, CSIRS resource #3} | {p1, p2} | RSRP #6 |
| {CSIRS resource #2, CSIRS resource #3} | {p3, p4} | RSRP #7 |
| ... | ... | ... |

In the examples in Table 2, Table 3, Table 4, and Table 5, a possible example in which the terminal apparatus receives different reference signals based on different antenna ports is described. In another possible implementation, the terminal apparatus may receive the reference signal based on the different reception beams, and then measure the reference signal. In this implementation, the antenna ports that are used to receive the reference signal on the terminal apparatus side and that are in the 2^{nd} column in Table 2, Table 3, Table 4, and Table 5 may be replaced with reception beams. For example, in Table 2, Table 3, Table 4, and Table 5, p1 is replaced with a reception beam #1, p2 is replaced with a reception beam #2, p3 is replaced with a reception beam #3, and p4 is replaced with a reception beam #4. Other content is similar to that in the example in Table 1 above. Details are not described again.

In the foregoing embodiment, two reception beams may correspond to a same antenna port, or may correspond to different antenna ports. For example, in another possible implementation, the terminal apparatus may alternatively receive the reference signal based on different reception beams in a same antenna port group (where one antenna port group may include one or more antenna ports), and then measure the reference signal. In this implementation, the antenna ports that are used to receive the reference signal on the terminal apparatus side and that are in the 2^{nd} column in Table 1 may be replaced with antenna ports and reception beams used to receive the reference signal on the terminal apparatus side, and the antenna ports that are used to receive the reference signal on the terminal apparatus side and that are in the 2^{nd} column in Table 2, Table 3, Table 4, and Table 5 may be replaced with reception beams. For example, in Table 2 and Table 3, p1 is replaced with a reception beam #1 of an antenna port #1, p2 is replaced with a reception beam #2 of the antenna port #1, p3 is replaced with a reception beam #3 of the antenna port #1, and p4 is replaced with a reception beam #4 of the antenna port #1. For example, in Table 4 and Table 5, p1 is replaced with a reception beam #1 of an antenna port #1, p2 is replaced with a reception beam #1 of an antenna port #2, p3 is replaced with a reception beam #2 of the antenna port #1, and p4 is replaced with a reception beam #2 of the antenna port #2. The 2^{nd} row in Table 2 is used as an example. The replaced row may be understood as follows: The terminal apparatus measures the reference signal that is sent by the network apparatus on the CSIRS resource #0 and that is received based on the reception beam #1 of the antenna port #1, to obtain the RSRP #0. The replaced row in the 3^{rd} row in Table 2 may be understood as follows: The terminal apparatus measures the reference signal that is sent by the network apparatus on the CSIRS resource #0 and that is received based on the reception beam #2 of the antenna port #1, to obtain the RSRP #1. Other content is similar to this. Details are not described again.

It may be learned from the implementation A2 that in this implementation, the terminal apparatus may receive the reference signal on the single resource or the plurality of resources based on the different reception beams, the different antenna ports, or the different reception beams of the same antenna port, and then measure the reference signal to obtain the measurement result. One measurement result is obtained by the terminal apparatus by measuring, based on different antenna ports and/or different reception beams, a reference signal transmitted on a resource. In this solution, the measurement result obtained by the terminal apparatus may more accurately reflect a difference between corresponding channel quality between antenna ports and/or corresponding channel quality between reception beams, to assist the terminal apparatus in selecting a better antenna port and/or beam for signal transmission.

Step 203: The terminal apparatus sends third information.

Correspondingly, the network apparatus receives the third information.

In this embodiment of this application, the third information may be carried on a PUCCH or a PUSCH channel.

The third information includes the at least one measurement result. The at least one measurement result is obtained by measuring the reference signal corresponding to the resource indicated by the resource configuration information. The at least one measurement result that may be included in the third information may be one measurement result, or may be a plurality of measurement results. A quantity of measurement results included in the third information may be flexibly determined based on an actual situation. One measurement result among the at least one measurement result is associated with at least one resource indicated by the resource configuration information.

In another possible implementation, the third information may further include one or more resource indexes. The resource index may include a channel state information reference signal resource indicator (CSI-RS resource indicator, CRI) and/or a synchronization signal and physical broadcast channel block resource indicator (SS/PBCH Block Resource indicator, SSBRI). In this embodiment of this application, a quantity of resource indexes and a correspondence between an RSRP measurement value and a resource index that are included in the third information may be determined by the terminal apparatus, or may be protocol-predetermined, or may be determined according to a preset rule, or may be indicated by the network apparatus. For example, a quantity, of resource indexes corresponding to each RSRP measurement value, included in the third information may be equal to a value of a parameter "maxMIMOLayer-PDSCH" configured by the network apparatus for the terminal apparatus, or a quantity of resource indexes that need to be included in the third information and a correspondence between the RSRP measurement value and the resource index are indicated in a channel state information measurement configuration configured by the network apparatus.

The resource index in the third information may be one or more resource indexes associated with a measurement result in the at least one measurement result, or may be described as that the resource index is a resource index corresponding to the measurement result. The measurement result is obtained by the terminal apparatus by measuring a reference signal on a resource corresponding to the resource index associated with the measurement result. In a possible implementation, the third information includes N resource indexes, and the N resource indexes may be selected as N resource indexes corresponding to first several reference signal measurement values (where a quantity of reference signal measurement values may be equal to or may not be equal to N) with largest reference signal measurement values. Reception antenna ports or beams, on a terminal side, corresponding to the N resources may be the same or different.

Quantities of resource indexes associated with two measurement results among the third information are different or the same. Resource indexes associated with the two measurement results among the third information may be completely different, completely the same, or partially the same. It may also be understood as that resource indexes associated with two measurement results among the at least one measurement result have no intersection or have an intersection.

A quantity of resource indexes in the third information may be equal to a quantity of measurement results. Alternatively, the quantity of resource indexes in the third information is greater than the quantity of measurement results. For example, one measurement result may be associated with a plurality of resource indexes, and the measurement result is obtained by the terminal apparatus by measuring signals transmitted on resources corresponding to the plurality of resource indexes. Alternatively, the quantity of resource indexes in the third information is less than the quantity of measurement results. For example, resource indexes corresponding to two measurement results have an intersection, and an association relationship between the resource index in the third information and the measurement result may be established according to a preset rule. In this case, the quantity of resource indexes that need to be indicated in the third information may be reduced. For a related example, refer to content in Table 7 below. Details are not described herein.

In a possible implementation, the third information may further indicate an association relationship between one measurement result and a resource index, and the terminal apparatus may explicitly or implicitly indicate the association relationship between the measurement result and the resource index. For example, the third information may include information indicating the association relationship between the measurement result and the resource index. For another example, the third information does not include the information indicating the association relationship between the measurement result and the resource index. The association relationship between the measurement result and the resource index in the third information may be determined according to a preset rule or protocol-pre-agreed. For example, there is a sorting relationship between measurement results in the third information, there is also a sorting relationship between resource indexes in the third information, there is a correspondence (where the correspondence may be preset or indicated by the network apparatus) between the measurement result and the resource index, and the network apparatus may determine, based on the correspondence, the resource index corresponding to the measurement result. For example, the third information includes {CSIRS resource #0, CSIRS resource #1, CSIRS resource #2}, and the third information further includes {RSRP #0, RSRP #1, RSRP #2}. Each RSRP corresponds to one resource index. The network apparatus may determine that the RSRP #0 corresponds to the CSIRS resource #0, the RSRP #1 corresponds to the CSIRS resource #1, and the RSRP #2 corresponds to the CSIRS resource #2.

In this embodiment of this application, there are a plurality of possible implementations of the association relationship between the measurement result and the resource index in the third information. The following separately provides descriptions by using examples in an implementation B1, an implementation B2, an implementation B3, and an implementation B4. In the implementation B1, in the third information, one measurement result corresponds to one resource index. In the implementation B2, in the third information, quantities of resource indexes corresponding to two measurement results may be different. In the implementation B3, in the third information, quantities of resource indexes corresponding to two measurement results may be the same. In the implementation B4, in the third information, the measurement result may be a measurement result corresponding to a resource group.

In the implementation B1, the third information includes a resource index corresponding to each measurement result.

For example, the third information includes {CSIRS resource #0, CSIRS resource #1, CSIRS resource #2}, and the third information further includes {RSRP #0, RSRP #1, RSRP #2}. In this embodiment of this application, the CSIRS resource #0, the CSIRS resource #1, the CSIRS resource #2, and the like may be considered as examples of resource indexes. In this embodiment of this application, the RSRP #0, the RSRP #1, the RSRP #2, and the like may be considered as examples of measurement result indexes. In a possible implementation, the RSRP sent by the terminal apparatus in the third information may be one or more RSRPs with optimal quality in the RSRPs obtained by the terminal apparatus. For example, channel quality indicated by the RSRP #0 may be better than or the same as channel quality indicated by the RSRP #1, the channel quality indicated by the RSRP #1 may be better than or the same as channel quality indicated by the RSRP #2, and the channel quality indicated by the RSRP #2 may be better than or the same as channel quality indicated by the RSRP #3. In this example, a relationship between the resource index and the measurement result may be shown in Table 6.

Refer to Table 6. The third information includes {CSIRS resource #0, CSIRS resource #1, CSIRS resource #2}, and {RSRP #0, RSRP #1, RSRP #2}. Each RSRP is associated with one resource index. In 2^{nd} row in Table 6, the RSRP #0 is obtained by the terminal apparatus by measuring a reference signal transmitted on a resource associated with a 1^{st} resource index (namely, the CSIRS resource #0) in the third information, and this may also be described as that the CSIRS resource #0 corresponds to the RSRP #0. Content in another row is similar to this. Details are not described again.

**Table 6 Example of the correspondence between the resource index and the measurement result**

| Measurement result | Resource index associated with the measurement result | Descriptions of a relationship between the measurement result and the resource |
|---|---|---|
| RSRP #0 | CSIRS resource #0 | The RSRP #0 is obtained by the terminal apparatus by measuring a reference signal transmitted on a resource associated with the CSIRS resource #0. |
| RSRP #1 | CSIRS resource #1 | The RSRP #1 is obtained by the terminal apparatus by measuring a reference signal transmitted on a resource associated with the CSIRS resource #1. |
| RSRP #2 | CSIRS resource #2 | The RSRP #2 is obtained by the terminal apparatus by measuring a reference signal transmitted on a resource associated with the CSIRS resource #2. |

In the implementation B2, in the third information, quantities of resource indexes corresponding to two measurement results may be different.

In the implementation B2, in a possible implementation, quantities of resource indexes corresponding to any two measurement results among the third information are different, so that the network apparatus can indicate a plurality of resource indexes to the terminal apparatus in a manner of indicating a quantity of resources, and then signaling overheads for indicating the resource indexes by the network apparatus can be reduced. For detailed descriptions of the implementation solution, refer to related descriptions in a subsequent implementation C2.1. Details are not described herein.

For example, the third information includes {CSIRS resource #0, CSIRS resource #1, CSIRS resource #2, CSIRS resource #3}, and {RSRP #0, RSRP #1, RSRP #2, RSRP #3}. In this example, a relationship between the resource index and the measurement result may be shown in Table 7.

Refer to Table 7. A 1^{st} RSRP (namely, the RSRP #0) in the third information corresponds to a 1^{st} resource index (namely, the CSIRS resource #0) in the third information, a 2^{nd} RSRP (namely, the RSRP #1) in the third information corresponds to first two resource indexes (namely, the CSIRS resource #0 and the CSIRS resource #1) in the third information, a 3^{rd} RSRP (namely, the RSRP #2) in the third information corresponds to first three resource indexes (namely, the CSIRS resource #0, the CSIRS resource #1, and the CSIRS resource #2) in the third information, and so on. It may be learned that there is a correspondence between the measurement result and the resource index in this example, and the network apparatus may determine, based on the correspondence, the resource index corresponding to the measurement result. For related content, refer to the example in Table 7. Details are not described again.

**Table 7 Example of the correspondence between the resource index and the measurement result**

| Measurement result | Resource index associated with the measurement result | Descriptions of a relationship between the measurement result and the resource |
|---|---|---|
| RSRP #0 | CSIRS resource #0 | The RSRP #0 is obtained by the terminal apparatus by measuring a reference signal transmitted on a resource associated with the CSIRS resource #0. |
| RSRP #1 | CSIRS resource #0 and CSIRS resource #1 | The RSRP #1 is obtained by the terminal apparatus by measuring a reference signal transmitted on a resource associated with the CSIRS resource #0 and the CSIRS resource #1. |
| RSRP #2 | CSIRS resource #0, CSIRS resource #1, and CSIRS resource #2 | The RSRP #2 is obtained by the terminal apparatus by measuring a reference signal transmitted on a resource associated with the CSIRS resource #0, the CSIRS resource #1, and the CSIRS resource #2. |
| RSRP #3 | CSIRS resource #0, CSIRS resource #1, CSIRS resource #2, and CSIRS resource #3 | The RSRP #3 is obtained by the terminal apparatus by measuring a reference signal transmitted on a resource associated with the CSIRS resource #0, the CSIRS resource #1, the CSIRS resource #2, and the CSIRS resource #3. |

For another example, the third information includes {CSIRS resource #0, CSIRS resource #1, CSIRS resource #2, CSIRS resource #3, CSIRS resource #4, CSIRS resource #5, CSIRS resource #6, CSIRS resource #7, CSIRS resource #8, CSIRS resource #9}, and {RSRP #0, RSRP #1, RSRP #2, RSRP #3}. In this example, a relationship between the resource index and the measurement result may be shown in Table 8.

Refer to Table 8. A 1^{st} RSRP (namely, the RSRP #0) in the third information corresponds to a 1^{st} resource index (namely, the CSIRS resource #0) in the third information, a 2^{nd} RSRP (namely, the RSRP #1) in the third information corresponds to two subsequent resource indexes (namely, the CSIRS resource #1 and the CSIRS resource #2) in the third information, a 3^{rd} RSRP (namely, the RSRP #2) in the third information corresponds to three subsequent resource indexes (namely, the CSIRS resource #3, the CSIRS resource #4, and the CSIRS resource #5) in the third information, and so on. The network apparatus may determine, according to the preset rule, a resource index corresponding to each RSRP. For related content, refer to the example in Table 8. Details are not described again.

**Table 8 Example of the correspondence between the resource index and the measurement result**

| Measurement result | Resource index corresponding to the measurement result | Descriptions of a relationship between the measurement result and the resource |
|---|---|---|
| RSRP #0 | CSIRS resource #0 | The RSRP #0 is obtained by the terminal apparatus by measuring a reference signal transmitted on a resource associated with the CSIRS resource #0. |
| RSRP #1 | CSIRS resource #1 and CSIRS resource #2 | The RSRP #1 is obtained by the terminal apparatus by measuring a reference signal transmitted on a resource associated with the CSIRS resource #1 and the CSIRS resource #2. |
| RSRP #2 | CSIRS resource #3, CSIRS resource #4, and CSIRS resource #5 | The RSRP #2 is obtained by the terminal apparatus by measuring a reference signal transmitted on a resource associated with the CSIRS resource #3, the CSIRS resource #4, and the CSIRS resource #5. |
| RSRP #3 | CSIRS resource #6, CSIRS resource #7, CSIRS resource #8, and CSIRS resource #9 | The RSRP #3 is obtained by the terminal apparatus by measuring a reference signal transmitted on a resource associated with the CSIRS resource #6, the CSIRS resource #7, the CSIRS resource #8, and the CSIRS resource #9. |

According to the example provided in the implementation B2, the measurement result sent by the terminal apparatus may correspond to one or more resource indexes, and the solution is flexible. Therefore, when the network apparatus subsequently needs to perform signal transmission based on a plurality of resources, the network apparatus may also determine, based on the measurement result corresponding to the plurality of resource indexes, quality of signals transmitted on the plurality of resources, and then select a better resource in the scenario in which the signals are transmitted on the plurality of resources. In addition, in the solution provided in Table 7, the third information carries less information about the resource index, so that signaling overheads can be reduced.

In the implementation B3, in the third information, quantities of resource indexes corresponding to two measurement results may be the same.

In a possible implementation, in the third information, quantities of resource indexes associated with any two measurement results are equal. For example, the quantity is M, and M is a positive integer greater than 1. In a possible implementation, the terminal apparatus may traverse any measurement results associated with M resource indexes, and select first several measurement results with optimal quality for reporting (that is, carry the measurement results in the third information).

For example, the third information includes {CSIRS resource #0, CSIRS resource #1, CSIRS resource #2, CSIRS resource #3, CSIRS resource #4, CSIRS resource #5, CSIRS resource #6, CSIRS resource #7}, and {RSRP #0, RSRP #1, RSRP #2, RSRP #3}. In this example, a relationship between the resource index and the measurement result may be shown in Table 9.

Refer to Table 9. One RSRP in the third information corresponds to two measurement results. For example, a 1^{st} RSRP (namely, the RSRP #0) in the third information corresponds to a 1^{st} resource index and a 2^{nd} resource index (namely, the CSIRS resource #0 and the CSIRS resource #1) in the third information, a 2^{nd} RSRP (namely, the RSRP #1) in the third information corresponds to two subsequent resource indexes (namely, the CSIRS resource #1 and the CSIRS resource #2) in the third information, and so on. The network apparatus may determine, according to the preset rule, a resource index corresponding to each RSRP. For related content, refer to the example in Table 9. Details are not described again.

**Table 9 Example of the correspondence between the resource index and the measurement result**

| Measurement result | Resource index corresponding to the measurement result | Descriptions of a relationship between the measurement result and the resource |
|---|---|---|
| RSRP #0 | CSIRS resource #0 and CSIRS resource #1 | The RSRP #0 is obtained by the terminal apparatus by measuring a reference signal transmitted on a resource associated with the CSIRS resource #0 and the CSIRS resource #1. |
| RSRP #1 | CSIRS resource #2 and CSIRS resource #3 | The RSRP #1 is obtained by the terminal apparatus by measuring a reference signal transmitted on a resource associated with the CSIRS resource #2 and the CSIRS resource #3. |
| RSRP #2 | CSIRS resource #4 and CSIRS resource #5 | The RSRP #2 is obtained by the terminal apparatus by measuring a reference signal transmitted on a resource associated with the CSIRS resource #4 and the CSIRS resource #5. |
| RSRP #3 | CSIRS resource #6 and CSIRS resource #7 | The RSRP #3 is obtained by the terminal apparatus by measuring a reference signal transmitted on a resource associated with the CSIRS resource #6 and the CSIRS resource #7. |

According to the example provided in Table 9, a plurality of measurement results sent by the terminal apparatus may correspond to a plurality of resource groups, and the plurality of resource groups may include a same quantity of resources. Therefore, when the network apparatus needs to perform real-time scheduling-based multi-user transmission, for example, needs to allocate, to the user, a resource group including two resources, the network apparatus may perform selection in the plurality of resource groups, and a selection range is wide, so that a more appropriate resource index reference can be selected for downlink or uplink transmission of the current user by comprehensively considering a signal and interference of the user.

In the implementation B4, in the third information, the measurement result may be a measurement result corresponding to a resource group.

In a possible implementation, the at least one measurement result is associated with M1 resources in the resource configured by the resource configuration information, and each of the at least one measurement result is associated with one resource group. In a possible implementation, one resource group includes K0 resources in the M1 resources, and K0 is an integer greater than 1. In another possible implementation, the measurement result in the third information corresponds to all combinations of the M1 resources.

For example, the third information includes {CSIRS resource #0, CSIRS resource #1, CSIRS resource #2, CSIRS resource #3}, and {RSRP #0, RSRP #1, RSRP #2, RSRP #3, RSRP #4, RSRP #5}. In this example, a relationship between the resource index and the measurement result may be shown in Table 10.

Refer to Table 10. Each of the six RSRPs corresponds to two resource indexes, a combination of resource indexes corresponding to the six RSRPs includes all combinations that can be formed by the four resource indexes, and an association relationship between the RSRP and a resource index combination may be preset or protocol-pre-stipulated. For the preset rule, refer to Table 10. It may be learned from Table 10 that six possible combinations are provided for the four resource indexes based on a sequence relationship, and measurement results sequentially correspond to one resource index combination. For example, a 3^{rd} row in Table 10 may be understood as follows: The RSRP #1 included in the third information is obtained by the terminal apparatus by measuring a reference signal transmitted on a resource associated with the CSIRS resource #0 and the CSIRS resource #2. Content in another row is similar to this. Details are not described again.

**Table 10 Example of the correspondence between the resource index and the measurement result**

| Measurement result | Resource index | Descriptions of a relationship between the measurement result and the resource |
|---|---|---|
| RSRP #0 | CSIRS resource #0 and CSIRS resource #1 | The RSRP #0 is obtained by the terminal apparatus by measuring a reference signal transmitted on a resource associated with the CSIRS resource #0 and the CSIRS resource #1. |
| RSRP #1 | CSIRS resource #0 and CSIRS resource #2 | The RSRP #1 is obtained by the terminal apparatus by measuring a reference signal transmitted on a resource associated with the CSIRS resource #0 and the CSIRS resource #2. |
| RSRP #2 | CSIRS resource #0 and CSIRS resource #3 | The RSRP #2 is obtained by the terminal apparatus by measuring a reference signal transmitted on a resource associated with the CSIRS resource #0 and the CSIRS resource #3. |
| RSRP #3 | CSIRS resource #1 and CSIRS resource #2 | The RSRP #3 is obtained by the terminal apparatus by measuring a reference signal transmitted on a resource associated with the CSIRS resource #1 and the CSIRS resource #2. |
| RSRP #4 | CSIRS resource #1 and CSIRS resource #3 | The RSRP #2 is obtained by the terminal apparatus by measuring a reference signal transmitted on a resource associated with the CSIRS resource #1 and the CSIRS resource #3. |
| RSRP #5 | CSIRS resource #2 and CSIRS resource #3 | The RSRP #3 is obtained by the terminal apparatus by measuring a reference signal transmitted on a resource associated with the CSIRS resource #2 and the CSIRS resource #3. |

In another possible implementation, the third information may include two resource indexes and one measurement result. For example, the third information includes {CSIRS resource #0, CSIRS resource #1}, and {RSRP #0}. For related content, refer to the example in Table 11. Details are not described again.

**Table 11 Example of the correspondence between the resource index and the measurement result**

| Measurement result | Resource index corresponding to the measurement result | Descriptions of a relationship between the measurement result and the resource |
|---|---|---|
| RSRP #0 | CSIRS resource #0 and CSIRS resource #1 | The RSRP #0 is obtained by the terminal apparatus by measuring a reference signal transmitted on a resource associated with the CSIRS resource #0 and the CSIRS resource #1. |

According to the example provided in the implementation B4, the measurement result sent by the terminal apparatus may correspond to a plurality of resource indexes. Therefore, when the network apparatus subsequently needs to perform signal transmission based on a plurality of resources, the network apparatus may also determine, based on the measurement result corresponding to the plurality of resource indexes, quality of signals transmitted on the plurality of resources, and then select a better resource in the scenario in which the signals are transmitted on the plurality of resources.

In this embodiment of this application, if one measurement result corresponds to a plurality of resources, it may be considered by default that the plurality of resources may be received through a same antenna port or a same beam of the terminal apparatus, and the measurement result may be obtained through measurement based on the plurality of resources received through the same receive antenna port or beam.

In this embodiment of this application, the measurement result in the third information may be associated with antenna ports of one or more terminal apparatuses, and antenna ports, on a terminal apparatus side, corresponding to two measurement results may be the same or different, or may have an intersection set or have no intersection set. In this embodiment of this application, resources (or pilot resources, or pilot antenna port groups on a network apparatus side), on the terminal apparatus side, corresponding to different antenna ports may be the same, or may be different (for example, have no intersection set or partially the same).

For example, the at least one measurement result includes a first measurement result and a second measurement result. The first measurement result is obtained by the terminal apparatus by measuring a reference signal, on a resource indicated by a resource index associated with the first measurement result, received by at least one first antenna port. The second measurement result is obtained by the terminal apparatus by measuring a reference signal, on a resource indicated by a resource index associated with the second measurement result, received by at least one second antenna port. A first antenna port of the at least one first antenna port is different from a second antenna port of the at least one second antenna port. The resource indexes associated with the first measurement result and the second measurement result are the same or different.

For example, the third information includes {RSRP #0, RSRP #1, RSRP #2}, and {CSIRS resource #0, CSIRS resource #1, CSIRS resource #2}. This example may be shown in Table 12.

Refer to Table 12. A 1^{st} measurement result (namely, the RSRP #0) is obtained by the terminal apparatus by measuring a reference signal transmitted on a resource associated with a 1^{st} resource index (namely, the CSIRS resource #0) in the third information, a 2^{nd} measurement result (namely, the RSRP #1) is obtained by the terminal apparatus by measuring a reference signal transmitted on a resource associated with a 2^{nd} resource index (namely, the CSIRS resource #1) in the third information, and a 3^{rd} measurement result (namely, the RSRP #2) is obtained by the terminal apparatus by measuring a reference signal transmitted on a resource associated with a 3^{rd} resource index (namely, the CSIRS resource #2) in the third information.

In this example, antenna ports, of the terminal apparatuses, associated with two measurement results may be different. For example, the RSRP #0 is associated with an antenna port #1, the RSRP #1 is associated with an antenna port #2, and the RSRP #1 is associated with an antenna port #3. In a possible implementation, for one measurement result in the third information, the measurement result is an optimal one of a plurality of measurement results corresponding to reference signals received on a plurality of resources by an antenna port, of the terminal apparatus, associated with the measurement result.

**Table 12 Example of the correspondence between the resource index and the measurement result**

| Measurement result | Resource index corresponding to the measurement result | Descriptions of a relationship between the measurement result and the resource |
|---|---|---|
| RSRP #0 | CSIRS resource #0 | The RSRP #0 is obtained by the terminal apparatus by measuring a reference signal, transmitted on a resource associated with the CSIRS resource #0, received through the antenna port #1. |
| RSRP #1 | CSIRS resource #1 | The RSRP #1 is obtained by the terminal apparatus by measuring a reference signal, transmitted on a resource associated with the CSIRS resource #1, received through the antenna port #2. |
| RSRP #2 | CSIRS resource #2 | The RSRP #2 is obtained by the terminal apparatus by measuring a reference signal, transmitted on a resource associated with the CSIRS resource #2, received through the antenna port #3. |

Step 204: The network apparatus sends first information.

Correspondingly, the terminal apparatus receives the first information.

In this embodiment of this application, for example, the first information may be carried in at least one of RRC signaling, DCI signaling, or a MAC-CE.

The first information includes information indicating indexes of the plurality of resources.

The network apparatus may indicate TCI information, for example, a TCI-state or spatial relation information, for the terminal apparatus. If the TCI information is configured for downlink transmission, the TCI information may be used to guide the terminal apparatus to select a downlink reception beam. For example, the terminal apparatus may determine that the downlink reception beam includes a resource indicated by the TCI information. If the TCI information is configured for uplink transmission, the TCI information may be used to guide the terminal apparatus to select an uplink transmission beam. For example, the terminal apparatus may determine that the uplink transmission beam includes a resource indicated by the TCI information. If the TCI information is associated with a plurality of resources, and the plurality of resources correspond to a plurality of beams, it may be considered that the network apparatus receives an uplink signal through the plurality of beams, or sends a downlink signal through the plurality of beams.

In this embodiment of this application, the first information may include indexes of the plurality of resources. Alternatively, the first information does not include the resource index, but may include some information associated with the resource index, and the terminal apparatus may determine the corresponding resource index based on the information. The following provides two possible implementations by using examples in an implementation C1 and an implementation C2. In the implementation C1, the information indicating the indexes of the plurality of resources includes the indexes of the plurality of resources. In the implementation C2, the information indicating the indexes of the plurality of resources includes information associated with the indexes of the plurality of resources.

In the implementation C1, the information indicating the indexes of the plurality of resources includes the indexes of the plurality of resources.

In a possible implementation, the indexes of the plurality of resources may be carried in QCL-info included in the TC-state in the first information.

The following describes two possible examples by using an example C1.1 and an example C1.2. In the example C1.1, the resource index indicated by the first information is a resource index that needs to be referred to for signal transmission. In the example C1.2, the resource index indicated by the first information is a resource index that is not referred to for signal transmission, and the terminal apparatus determines, based on the first information, a resource index that is referred to for subsequent signal transmission.

In the example C1.1, the resource index indicated by the first information is a resource index that needs to be referred to for signal transmission.

Table 13 is an example of the information indicating the indexes of the plurality of resources in the first information in a form of a table.

Refer to a 5^{th} row in Table 13. The information indicating the indexes of the plurality of resources includes {CSIRS resource #0, CSIRS resource #1}. If the information is configured for downlink transmission, the network apparatus sends a downlink signal by using a spatial relation (or a transmission beam) corresponding to {CSIRS resource #0, CSIRS resource #1}, and the terminal apparatus selects a spatial relation (or a reception beam) of the downlink signal by referring to the spatial relation (or the reception beam) corresponding to {CSIRS resource #0, CSIRS resource #1}. It may also be understood that the transmission beam used by the network apparatus for downlink transmission includes one or more transmission beams corresponding to the CSIRS resource #0 and one or more transmission beams corresponding to the CSIRS resource #1. The terminal apparatus selects, by referring to a transmission beam (or referred to as a transmission beam set) corresponding to {CSIRS resource #0, CSIRS resource #1}, an appropriate reception beam to receive a downlink transmission signal. If the information is configured for uplink transmission, the terminal apparatus selects a spatial relation (or a transmission beam) of an uplink signal by referring to a spatial relation (or a reception beam) corresponding to {CSIRS resource #0, CSIRS resource #1}, and the network apparatus selects a spatial relation (or a reception beam) of the uplink signal by referring to the spatial relation (or the reception beam) corresponding to {CSIRS resource #0, CSIRS resource #1}. Content in another row is similar to this. Details are not described again.

**Table 13 Example of the information indicating the indexes of the plurality of resources in the first information**

| Information indicating the indexes of the plurality of resources | The information being configured for downlink transmission | The information being configured for uplink transmission |
|---|---|---|
| {CSIRS resource #0} | The network apparatus sends a downlink signal by using a spatial relation (or a transmission beam) corresponding to {CSIRS resource #0} | The terminal apparatus selects a spatial relation (or a transmission beam) of an uplink signal by referring to a spatial relation (or a reception beam) corresponding to {CSIRS resource #0}. |
| {CSIRS resource #1} | The network apparatus sends a downlink signal by using a spatial relation (or a transmission beam) corresponding to {CSIRS resource #1} | The terminal apparatus selects a spatial relation (or a transmission beam) of an uplink signal by referring to a spatial relation (or a reception beam) corresponding to {CSIRS resource #1}. |
| {CSIRS resource #2} | The network apparatus sends a downlink signal by using a spatial relation (or a transmission beam) corresponding to {CSIRS resource #2} | The terminal apparatus selects a spatial relation (or a transmission beam) of an uplink signal by referring to a spatial relation (or a reception beam) corresponding to {CSIRS resource #2}. |
| {CSIRS resource #0, CSIRS resource #1} | The network apparatus sends a downlink signal by using a spatial relation (or a transmission beam) corresponding to {CSIRS resource #0, CSIRS resource #1} | The terminal apparatus selects a spatial relation (or a transmission beam) of an uplink signal by referring to a spatial relation (or a reception beam) corresponding to {CSIRS resource #0, CSIRS resource #1}. |

In another possible implementation, the information indicating the indexes of the plurality of resources in the first information in this embodiment of this application may be associated with an antenna port of the terminal apparatus. For example, that the measurement result sent by the terminal apparatus in the third information is associated with the antenna port of the terminal apparatus may also be understood as that the terminal apparatus measures the reference signal received by the antenna port, to obtain the measurement result. In this way, the terminal apparatus may assist, based on the resource indicated by the information indicating the indexes of the plurality of resources, the terminal apparatus in determining selection of a downlink reception antenna port and/or an uplink transmission antenna port of the terminal apparatus.

With reference to the example in Table 13 above, a 2*^{nd}* row in Table 13 is used as an example. For example, the CSIRS resource #0 is associated with an antenna port #1 of the terminal apparatus. If the information is configured for downlink transmission, the terminal apparatus selects a spatial relation (or a reception beam) of a downlink signal by referring to a spatial relation (or a reception beam) corresponding to {CSIRS resource #0}, and receives the downlink signal through the antenna port #1. If the information is configured for uplink transmission, the terminal apparatus selects a spatial relation (or a transmission beam) of an uplink signal by referring to a spatial relation (or a reception beam) corresponding to {CSIRS resource #0}, and performs sending through the antenna port #1. Other content is similar to this. Details are not described again.

In the example C1.2, the resource index indicated by the first information is a resource index that is not referred to for signal transmission, and the terminal apparatus determines, based on the first information, a resource index that is referred to for subsequent signal transmission.

Table 14 is an example of the information indicating the indexes of the plurality of resources in the first information in a form of a table.

Refer to a 3^{rd} row in Table 14. The information indicating the indexes of the plurality of resources includes {CSIRS resource #0, CSIRS resource #1}. If the information is configured for downlink transmission, the network apparatus sends a downlink signal by using a spatial relation (or a transmission beam) different from a spatial relation (or a transmission beam) corresponding to {CSIRS resource #0, CSIRS resource #1}. If the information is configured for uplink transmission, the terminal apparatus selects a spatial relation (or a transmission beam) of an uplink signal by referring to a spatial relation different from a spatial relation (or a reception beam) corresponding to {CSIRS resource #0, CSIRS resource #1}. For example, the network apparatus sends a downlink signal by using a spatial relation orthogonal to a spatial relation (or a transmission beam) corresponding to {CSIRS resource #0, CSIRS resource #1}. For another example, the terminal apparatus selects a spatial relation (or a transmission beam) of an uplink signal by referring to a spatial relation orthogonal to a spatial relation (or a reception beam) corresponding to {CSIRS resource #0, CSIRS resource #1}. Content in another row is similar to this. Details are not described again.

**Table 14 Example of the information indicating the indexes of the plurality of resources in the first information**

| Information indicating the indexes of the plurality of resources | The information being configured for downlink transmission | The information being configured for uplink transmission |
|---|---|---|
| {CSIRS resource #0} | The network apparatus sends a downlink signal by using a spatial relation different from a spatial relation (or a transmission beam) corresponding to {CSIRS resource #0} | The terminal apparatus selects a spatial relation (or a transmission beam) of an uplink signal by referring to a spatial relation different from a spatial relation (or a reception beam) corresponding to {CSIRS resource #0}. |
| {CSIRS resource #0, CSIRS resource #1} | The network apparatus sends a downlink signal by using a spatial relation different from a spatial relation (or a transmission beam) corresponding to {CSIRS resource #0, CSIRS resource #1} | The terminal apparatus selects a spatial relation (or a transmission beam) of an uplink signal by referring to a spatial relation different from a spatial relation (or a reception beam) corresponding to {CSIRS resource #0, CSIRS resource #1}. |

In another possible implementation, the information indicating the indexes of the plurality of resources in the first information in this embodiment of this application may be associated with an antenna port of the terminal apparatus. For example, that the measurement result sent by the terminal apparatus in the third information is associated with the antenna port of the terminal apparatus may also be understood as that the terminal apparatus measures the reference signal received by the antenna port, to obtain the measurement result. In this way, the terminal apparatus may assist, based on the resource indicated by the information indicating the indexes of the plurality of resources, the terminal apparatus in determining selection of a downlink reception antenna port and/or an uplink transmission antenna port of the terminal apparatus.

With reference to the example in Table 14 above, a 2^{nd} row in Table 14 is used as an example. For example, the CSIRS resource #0 is associated with an antenna port #1 of the terminal apparatus. If the information is configured for downlink transmission, the terminal apparatus selects a spatial relation (or a reception beam) of a downlink signal by referring to a spatial relation different from a spatial relation (or a reception beam) corresponding to {CSIRS resource #0}, and receives the downlink signal through the antenna port #1. If the information is configured for uplink transmission, the terminal apparatus selects a spatial relation (or a transmission beam) of an uplink signal by referring to a spatial relation different from a spatial relation (or a reception beam) corresponding to {CSIRS resource #1}, and does not perform sending through the antenna port #1. Other content is similar to this. Details are not described again.

In the implementation C2, the information indicating the indexes of the plurality of resources includes information associated with the indexes of the plurality of resources.

In the implementation C2, the information indicating the indexes of the plurality of resources may include a plurality of implementations. The following separately provides descriptions in an implementation C2.1 and an implementation C2.2. In the implementation C2.1, the information indicating the indexes of the plurality of resources includes information indicating a resource quantity K1. In this embodiment of this application, K1 is an integer greater than 1, or K1 may be equal to 1. In the implementation C2.2, the information indicating the indexes of the plurality of resources includes information indicating a measurement result index K2. In an implementation C2.3, the information indicating the indexes of the plurality of resources includes information indicating a resource group index K3.

In a possible implementation, the information indicating the indexes of the plurality of resources may include a channel state information report configuration index indicator (CSI-ReportConfigId), and the channel state information report configuration index indicator (CSI-ReportConfigId) may be associated with the third information, that is, one channel state information report configuration index indicator (CSI-ReportConfigId) may correspond to one piece of third information. The network apparatus may configure a plurality of channel state information report configurations (CSI-ReportConfig) for the terminal apparatus, and for each channel state information report configuration (CSI-ReportConfig), the terminal apparatus reports one piece of third information.

In the implementation C2.1, the information indicating the indexes of the plurality of resources includes the information indicating the resource quantity K1.

The resource quantity K1 may have an association relationship with the resource index in the third information. For example, the resource quantity K1 is associated with the resource index of K1 corresponding to the first measurement result in the third information.

The third information may include one or more measurement results. The third information may include one measurement result. For distinguishing, the measurement result is referred to as the first measurement result, and the first measurement result is a measurement result, associated with K1 resources, in the at least one measurement result. Resources associated with the resource quantity K1 are the K1 resources associated with the first measurement result.

In another possible implementation, the third information includes a plurality of measurement results, and quantities of resource indexes associated with any two measurement results among the plurality of measurement results are different. In this case, the network apparatus may include, in first information, the information indicating the resource quantity K1, and the terminal apparatus may uniquely determine, based on the information about K1, the measurement results associated with the resource quantity K1 in the third information, and then determine resource indexes associated with the measurement results as a resource index indicated by the first information.

For example, in the example in Table 7, the third information includes {RSRP #0, RSRP #1, RSRP #2, RSRP #3}. The third information further includes {CSIRS resource #0, CSIRS resource #1, CSIRS resource #2, CSIRS resource #3}. For example, the RSRP #0 corresponds to the CSIRS resource #0, the RSRP #1 corresponds to the CSIRS resource #0 and the CSIRS resource #1, the RSRP #2 corresponds to the CSIRS resource #0, the CSIRS resource #1, and the CSIRS resource #2, and the RSRP #3 corresponds to the CSIRS resource #0, the CSIRS resource #1, the CSIRS resource #2, and the CSIRS resource #3. Quantities of resource indexes associated with any two measurement results are different.

The following uses Table 15 as an example to describe content in the first information in a form of a table. A 2^{nd} row in Table 15 is used as an example. A value of the information indicating the resource quantity K1 is 1, and the terminal apparatus may determine that {1} indicates a resource index, namely, the CSIRS resource #0, associated with an RSRP (namely, the RSRP #0) corresponding to a resource quantity 1 in the third information. The network apparatus sends a downlink signal by using a spatial relation (or a transmission beam) corresponding to {CSIRS resource #0}. The terminal apparatus selects a spatial relation (or a transmission beam) of an uplink signal by referring to a spatial relation (or a reception beam) corresponding to {CSIRS resource #0}. For related content, refer to related descriptions in Table 12 above. Details are not described again.

Similarly, in the 2^{nd} row in Table 15, the value of the information indicating the resource quantity K1 is 2, and the terminal apparatus may determine that {2} indicates resource indexes, namely, the CSIRS resource #0 and the CSIRS resource #1, associated with an RSRP (namely, the RSRP #1) corresponding to a resource quantity 2 in the third information.

Similarly, in a 3^{rd} row in Table 15, the value of the information indicating the resource quantity K1 is 3, and the terminal apparatus may determine that {3} indicates resource indexes, namely, the CSIRS resource #0, the CSIRS resource #1, and the CSIRS resource #2, associated with an RSRP (namely, the RSRP #2) corresponding to a resource quantity 3 in the third information. Content in another row is similar to this. Details are not described again.

**Table 15 Example of the information indicating the indexes of the plurality of resources in the first information according to the example in Table 7**

| Information indicating the indexes of the plurality of resources (information indicating the resource quantity K1) | Resources associated with the resource quantity K1 | The information being configured for downlink transmission | The information being configured for uplink transmission |
|---|---|---|---|
| {1} | {CSIRS resource #0} | The network apparatus sends a downlink signal by using a spatial relation (or a transmission beam) corresponding to {CSIRS resource #0} | The terminal apparatus selects a spatial relation (or a transmission beam) of an uplink signal by referring to a spatial relation (or a reception beam) corresponding to {CSIRS resource #0}. |
| {2} | {CSIRS resource #0, CSIRS resource #1} | The network apparatus sends a downlink signal by using a spatial relation (or a transmission beam) corresponding to {CSIRS resource #0, CSIRS resource #1} | The terminal apparatus selects a spatial relation (or a transmission beam) of an uplink signal by referring to a spatial relation (or a reception beam) corresponding to {CSIRS resource #0, CSIRS resource #1}. |
| {3} | {CSIRS resource #0, CSIRS resource #1, CSIRS resource #2} | The network apparatus sends a downlink signal by using a spatial relation (or a transmission beam) corresponding to {CSIRS resource #0, CSIRS resource #1, CSIRS resource #2} | The terminal apparatus selects a spatial relation (or a transmission beam) of an uplink signal by referring to a spatial relation (or a reception beam) corresponding to {CSIRS resource #0, CSIRS resource #1, CSIRS resource #2}. |
| {4} | {CSIRS resource #0, CSIRS resource #1, CSIRS resource #2, CSIRS resource #3} | The network apparatus sends a downlink signal by using a spatial relation (or a transmission beam) corresponding to {CSIRS resource #0, CSIRS resource #1, CSIRS resource #2, CSIRS resource #3} | The terminal apparatus selects a spatial relation (or a transmission beam) of an uplink signal by referring to a spatial relation (or a reception beam) corresponding to {CSIRS resource #0, CSIRS resource #1, CSIRS resource #2, CSIRS resource #3}. |

The foregoing example is an example with reference to Table 7 above. This implementation may also be combined with the example provided in Table 8 above. Related content is similar to this. Details are not described again.

In the foregoing solution, quantities of resource indexes associated with any two measurement results among the plurality of measurement results reported by the terminal apparatus are different. Therefore, when the network apparatus indicates the resource index to the terminal apparatus by using the resource quantity K1, the terminal apparatus may determine one or more resource indexes associated with the resource quantity K1. In this solution, resource overheads caused by resource indication can be reduced.

In the implementation C2.2, the information indicating the indexes of the plurality of resources includes the information indicating the measurement result index K2.

The measurement result index may also be replaced with another name, for example, a beam management report index.

A measurement result indicated by the measurement result index K2 belongs to the at least one measurement result, and the measurement result index K2 is associated with the plurality of resources. A rule for defining the measurement result index is flexible. In a possible implementation, the measurement result index may be an order of the measurement result in the third information. For example, the measurement result index K2 is a (K2)^{th} measurement result in the at least one measurement result included in the third information. In this embodiment of this application, K2 is an integer greater than 1, or K2 may be equal to 1. In this embodiment of this application, one measurement result in the third information may be associated with one or more resource indexes. Quantities of resources associated with any two measurement results among the third information may be the same or may be different.

In a possible implementation, quantities of resources associated with any two measurement results among the at least one measurement result are the same, and measurement results in the two measurement results are associated with a plurality of resources. For this example, refer to related content in Table 9 above.

For example, in the example in Table 9, the third information includes {CSIRS resource #0, CSIRS resource #1, CSIRS resource #2, CSIRS resource #3, the CSIRS resource #4, CSIRS resource #5, CSIRS resource #6, CSIRS resource #7}. The third information further includes {RSRP #0, RSRP #1, RSRP #2, RSRP #3}.

The following uses Table 16 as an example to describe content in the first information in a form of a table. A 2^{nd} row in Table 16 is used as an example. A value of the information indicating the measurement result index K2 is 1, and the terminal apparatus may determine that the resource index indicated by the measurement result index K2 is a resource index, namely, {CSIRS resource #0, CSIRS resource #1}, associated with a 1^{st} RSRP (namely, the RSRP #0) in the third information; a value of the information indicating the measurement result index K2 is 2, and the terminal apparatus may determine that the resource index indicated by the measurement result index K2 is a resource index, namely, {CSIRS resource #2, CSIRS resource #3}, associated with a 2^{nd} RSRP (namely, the RSRP #1) in the third information; and so on. Details are not described again.

**Table 16 Example of the information indicating the indexes of the plurality of resources in the first information according to the example in Table 9**

| Information indicating the indexes of the plurality of resources (information indicating the measurement result index K2) | Resource associated with the measurement result index K2 | The information being configured for downlink transmission | The information being configured for uplink transmission |
|---|---|---|---|
| {1} | {CSIRS resource #0, CSIRS resource #1} | The network apparatus sends a downlink signal by using a spatial relation (or a transmission beam) corresponding to {CSIRS resource #0, CSIRS resource #1} | The terminal apparatus selects a spatial relation (or a transmission beam) of an uplink signal by referring to a spatial relation (or a reception beam) corresponding to {CSIRS resource #0, CSIRS resource #1}. |
| {2} | {CSIRS resource #2, CSIRS resource #3} | The network apparatus sends a downlink signal by using a spatial relation (or a transmission beam) corresponding to {CSIRS resource #2, CSIRS resource #3} | The terminal apparatus selects a spatial relation (or a transmission beam) of an uplink signal by referring to a spatial relation (or a reception beam) corresponding to {CSIRS resource #2, CSIRS resource #3}. |
| {3} | {CSIRS resource #4, CSIRS resource #5} | The network apparatus sends a downlink signal by using a spatial relation (or a transmission beam) corresponding to {CSIRS resource #4, CSIRS resource #5} | The terminal apparatus selects a spatial relation (or a transmission beam) of an uplink signal by referring to a spatial relation (or a reception beam) corresponding to {CSIRS resource #4, CSIRS resource #5}. |
| {4} | {CSIRS resource #6, CSIRS resource #7} | The network apparatus sends a downlink signal by using a spatial relation (or a transmission beam) corresponding to {CSIRS resource #6, CSIRS resource #7} | The terminal apparatus selects a spatial relation (or a transmission beam) of an uplink signal by referring to a spatial relation (or a reception beam) corresponding to {CSIRS resource #6, CSIRS resource #7}. |

The foregoing example is an example with reference to Table 9 above. This implementation may also be combined with the examples provided in Table 6, Table 7, Table 8, Table 10, Table 11, or Table 12. Related content is similar to this. Details are not described again.

In another possible implementation, in the third information, quantities of resources in two resource groups associated with any two measurement results may be the same or may be different, and the two resource groups may have no intersection or have an intersection.

In a possible implementation, in the third information, quantities of resources associated with any two measurement results are the same. For example, the at least one measurement result is associated with M1 resources in the resource configured by the resource configuration information, and M1 is an integer greater than 1 (where the M1 resources may be all or a part of resources configured by the resource configuration information). Each of the at least one measurement result is associated with one resource group, one resource group includes K0 resources in the M1 resources, and K0 is an integer greater than 1. For example, the M1 resources correspond to a plurality of resource groups, and the plurality of resource groups include a resource group formed by resource combinations obtained by selecting the K0 resources from the M1 resources. For example, the resource group corresponding to the measurement result in the third information is all combinations of the M1 resources. For this example, refer to related content in Table 10 above.

For example, in the example in Table 10, the third information includes {CSIRS resource #0, CSIRS resource #1, CSIRS resource #2, CSIRS resource #3}. The third information further includes {RSRP #0, RSRP #1, RSRP #2, RSRP #3, RSRP #4, RSRP #5}.

The following uses Table 17 as an example to describe content in the first information in a form of a table. A 2^{nd} row in Table 17 is used as an example. A value of the information indicating the measurement result index K2 is 1, and the terminal apparatus may determine that the resource index indicated by the measurement result index K2 is a resource index, namely, {CSIRS resource #0, CSIRS resource #1}, corresponding to a resource group associated with a 1^{st} RSRP (namely, the RSRP #0) in the third information. A value of the information indicating the measurement result index K2 is 2, and the terminal apparatus may determine that the resource index indicated by the measurement result index K2 is a resource index, namely, {CSIRS resource #0, CSIRS resource #2}, corresponding to a resource group associated with a 2^{nd} RSRP (namely, the RSRP #1) in the third information. Other content is similar to this. Details are not described again.

**Table 17 Example of the information indicating the indexes of the plurality of resources in the first information according to the example in Table 10**

| Information indicating the indexes of the plurality of resources (information indicating the measurement result index K2) | Resource associated with the measurement result index K2 | The information being configured for downlink transmission | The information being configured for uplink transmission |
|---|---|---|---|
| {1} | {CSIRS resource #0, CSIRS resource #1} | The network apparatus sends a downlink signal by using a spatial relation (or a transmission beam) corresponding to {CSIRS resource #0, CSIRS resource #1} | The terminal apparatus selects a spatial relation (or a transmission beam) of an uplink signal by referring to a spatial relation (or a reception beam) corresponding to {CSIRS resource #0, CSIRS resource #1}. |
| {2} | {CSIRS resource #0, CSIRS resource #2} | The network apparatus sends a downlink signal by using a spatial relation (or a transmission beam) corresponding to {CSIRS resource #0, CSIRS resource #2} | The terminal apparatus selects a spatial relation (or a transmission beam) of an uplink signal by referring to a spatial relation (or a reception beam) corresponding to {CSIRS resource #0, CSIRS resource #2}. |
| {3} | {CSIRS resource #0, CSIRS resource #3} | The network apparatus sends a downlink signal by using a spatial relation (or a transmission beam) corresponding to {CSIRS resource #0, CSIRS resource #3} | The terminal apparatus selects a spatial relation (or a transmission beam) of an uplink signal by referring to a spatial relation (or a reception beam) corresponding to {CSIRS resource #0, CSIRS resource #3}. |
| {4} | {CSIRS resource #1, CSIRS resource #2} | The network apparatus sends a downlink signal by using a spatial relation (or a transmission beam) corresponding to {CSIRS resource #1, CSIRS resource #2} | The terminal apparatus selects a spatial relation (or a transmission beam) of an uplink signal by referring to a spatial relation (or a reception beam) corresponding to {CSIRS resource #1, CSIRS resource #2}. |
| {5} | {CSIRS resource #1, CSIRS resource #3} | The network apparatus sends a downlink signal by using a spatial relation (or a transmission beam) corresponding to {CSIRS resource #1, CSIRS resource #3} | The terminal apparatus selects a spatial relation (or a transmission beam) of an uplink signal by referring to a spatial relation (or a reception beam) corresponding to {CSIRS resource #1, CSIRS resource #3}. |
| {6} | {CSIRS resource #2, CSIRS resource #3} | The network apparatus sends a downlink signal by using a spatial relation (or a transmission beam) corresponding to {CSIRS resource #2, CSIRS resource #3} | The terminal apparatus selects a spatial relation (or a transmission beam) of an uplink signal by referring to a spatial relation (or a reception beam) corresponding to {CSIRS resource #2, CSIRS resource #3}. |

The foregoing example is an example with reference to Table 10 above. This implementation may also be combined with the examples provided in Table 6, Table 7, Table 8, Table 9, Table 11, or Table 12. Related content is similar to this. Details are not described again.

In the foregoing solution, because the terminal apparatus reports one or more measurement results, and the measurement result index K2 may be associated with the resource index, the terminal apparatus may determine the resource index based on the measurement result index K2, so that resource overheads caused by resource indication can be reduced.

In the implementation C2.3, the information indicating the indexes of the plurality of resources includes the information indicating the resource group index K3.

The resource group index may also be replaced with another name, for example, a beam combination index.

The resource group index K3 may be considered as an index of one resource group, and one resource group may include one or more resources. A resource index associated with the resource group index K3 is indexes of at least two resources included in the resource group corresponding to the resource group index K3. In a possible implementation, in the implementation C2.3, the at least one measurement result included in the third information is a plurality of measurement results. The resource group corresponding to the resource group index K3 includes resources associated with the plurality of measurement results in the at least one measurement result.

In a possible implementation, one measurement result among the at least one measurement result in the third information is associated with one or more resources in the third information. There may be an association relationship between the index of the resource group indicated by the network apparatus and a combination of the plurality of measurement results reported by the terminal apparatus (where the association relationship may be predefined, or may be pre-negotiated, or may be indicated by the network apparatus). A resource indicated by an index of one resource group may be indexes of resources corresponding to a plurality of measurement result combinations corresponding to the resource group index.

In another possible implementation, one measurement result among the at least one measurement result in the third information is associated with one resource in the third information. For example, there is a one-to-one correspondence between a plurality of resources and a plurality of measurement results in the third information. There may be an association relationship between the index of the resource group indicated by the network apparatus and a combination of the plurality of resources reported by the terminal apparatus (where the association relationship may be predefined, or may be pre-negotiated, or may be indicated by the network apparatus). A resource indicated by an index of one resource group may be indexes of resources corresponding to a plurality of resource groups corresponding to the resource group index.

For example, the third information includes the plurality of measurement results and the plurality of resources, and the plurality of measurement results may be in a one-to-one correspondence with the plurality of resources. To reduce signaling overheads, the network apparatus and the terminal apparatus may agree on an index of the resource group. In this way, the network apparatus may indicate the resource group index K3 to the terminal apparatus, and then the terminal apparatus may determine, based on a pre-agreed correspondence between the resource group index and the resource group, the resource group corresponding to the resource group index K3, and then obtain the index of the resource included in the resource group.

For example, in the example in Table 6, the third information includes {CSIRS resource #0, CSIRS resource #1, CSIRS resource #2}. The third information further includes {RSRP #0, RSRP #1, RSRP #2}.

The following uses Table 18 as an example to describe content in the first information in a form of a table. A 2^{nd} row in Table 18 is used as an example. A value of the information indicating the resource group index K3 is 0, and the terminal apparatus may determine, based on a pre-agreed correspondence between the resource group index and the resource group, that the resource index indicated by the resource group index K3 is a resource group including a 1^{st} resource and a 2^{nd} resource (or a resource associated with a 1^{st} measurement result and a resource associated with a 2^{nd} measurement result) in the third information, where the index of the resource included in the resource group is {CSIRS resource #0, CSIRS resource #1}. Similarly, a value of the information indicating the resource group index K3 is 1, and the terminal apparatus may determine that the resource index indicated by the resource group index K3 is a resource group including a 1^{st} resource and a 3^{rd} resource (or a resource associated with a 1^{st} measurement result and a resource associated with a 3^{rd} measurement result) in the third information, where the index of the resource included in the resource group is {CSIRS resource #0, CSIRS resource #2}. A value of the information indicating the resource group index K3 is 2, and the terminal apparatus may determine that the resource index indicated by the resource group index K3 is a resource group including a 2^{nd} resource and a 3^{rd} resource (or a resource associated with a 2^{nd} measurement result and a resource associated with a 3^{rd} measurement result) in the third information, where the index of the resource included in the resource group is {CSIRS resource #1, CSIRS resource #2}.

In this embodiment of this application, the correspondence between the resource group index and the resource group may be preset, or may be pre-negotiated, or may be indicated by the network apparatus. In a possible implementation, a corresponding rule between a resource group index and a resource group may be pre-agreed, and the terminal apparatus and the network apparatus determine the correspondence between the resource group index and the resource group according to the rule. For a related example, refer to the foregoing content. Details are not described again.

**Table 18 Example of the information indicating the indexes of the plurality of resources in the first information according to the example in Table 6**

| Information indicating the indexes K3 of the plurality of resources (information indicating the resource group index K3) | Resource associated with the resource group index K3 | The information being configured for downlink transmission | The information being configured for uplink transmission |
|---|---|---|---|
| {0} | {CSIRS resource #0, CSIRS resource #1} | The network apparatus sends a downlink signal by using a spatial relation (or a transmission beam) corresponding to {CSIRS resource #0, CSIRS resource #1} | The terminal apparatus selects a spatial relation (or a transmission beam) of an uplink signal by referring to a spatial relation (or a reception beam) corresponding to {CSIRS resource #0, CSIRS resource #1}. |
| {1} | {CSIRS resource #0, CSIRS resource #2} | The network apparatus sends a downlink signal by using a spatial relation (or a transmission beam) corresponding to {CSIRS resource #2, CSIRS resource #3} | The terminal apparatus selects a spatial relation (or a transmission beam) of an uplink signal by referring to a spatial relation (or a reception beam) corresponding to {CSIRS resource #2, CSIRS resource #3}. |
| {2} | {CSIRS resource #1, CSIRS resource #2} | The network apparatus sends a downlink signal by using a spatial relation (or a transmission beam) corresponding to {CSIRS resource #1, CSIRS resource #2} | The terminal apparatus selects a spatial relation (or a transmission beam) of an uplink signal by referring to a spatial relation (or a reception beam) corresponding to {CSIRS resource #1, CSIRS resource #2}. |

The foregoing example is an example with reference to Table 6 above. This implementation may also be combined with the examples provided in Table 6, Table 7, Table 8, Table 9, Table 10, Table 11, or Table 12. Related content is similar to this. Details are not described again.

In the foregoing solution, because the terminal apparatus reports one or more measurement results, and the resource group index K3 may be associated with the resource index, the terminal apparatus may determine the resource index based on the resource group index K3, so that resource overheads caused by resource indication can be reduced.

In the implementation C2, the information indicating the indexes of the plurality of resources in the first information in this embodiment of this application may be associated with an antenna port of the terminal apparatus. In this way, the terminal apparatus may assist, based on the resource indicated by the information indicating the indexes of the plurality of resources, the terminal apparatus in determining selection of a downlink reception antenna port and/or an uplink transmission antenna port of the terminal apparatus. For related content, refer to related examples in Table 13 and Table 14. Details are not described again.

Step 205: The terminal apparatus performs transmission of a first signal.

In step 205, the transmission of the first signal may be performed between the terminal apparatus and the network apparatus. The first signal may be a downlink signal sent by the network apparatus to the terminal apparatus, or may be an uplink signal sent by the terminal apparatus to the network apparatus.

In this embodiment of this application, the terminal apparatus or the network apparatus may schedule the transmission of the first signal at a MAC layer. For example, the transmission, of the first signal, scheduled by the network apparatus may be performed by a DU of the network apparatus. The first signal may include one or more of a PUCCH, a PUSCH, a CSIRS, a PDSCH, a physical downlink control channel (physical downlink control channel, PDCCH), or an SRS.

The spatial relation of the first signal is associated with the spatial relation of the plurality of resources indicated by the first information.

The network apparatus selects one or more resources as a reference signal associated with a TCI-state or a spatial relation, and configures the reference signal for the terminal apparatus, to guide the terminal apparatus to select a reception beam for downlink transmission or select a transmission beam for uplink transmission.

For example, the network apparatus sends a piece of DCI signaling to the terminal apparatus, where the DCI signaling includes a transmission configuration indicator (Transmission Configuration Indicator, TCI) field. The TCI field indicates a TCI-state. The TCI-state is used for downlink or uplink transmission. The TCI-state includes information indicating indexes of a plurality of resources in the first information. For downlink transmission using the TCI-state, the terminal apparatus may perform receiving through a reception beam corresponding to the resource index. The reception beam corresponding to the resource index is known in advance by the terminal apparatus, for example, is learned of by measuring the resource corresponding to the resource index. In this manner, the network apparatus may indicate a correct reception beam to the terminal apparatus.

Because a network apparatus configures the resource for the terminal apparatus by using the resource configuration information, the terminal apparatus may measure, based on the resource configuration information, the reference signal on the resource configured by the network apparatus. In addition, because the terminal apparatus sends the third information, the network apparatus may select, based on the measurement result, a resource with better channel quality, to improve subsequent communication quality.

According to embodiments provided in this application, the terminal apparatus can perform multi-beam joint measurement and reporting. The network apparatus may configure, for the terminal apparatus, QCL information associated with a multi-beam reference signal, to guide the terminal apparatus to select a reception beam based on downlink multi-beam sending or select a transmission beam based on uplink multi-beam receiving, thereby improving a signal transmission rate.

It may be understood that, to implement functions in the foregoing embodiments, the first apparatus, the second apparatus, and the positioning management apparatus may include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

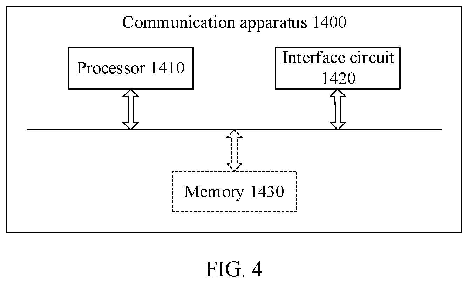

FIG. 3 and FIG. 4 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In embodiments of this application, the communication apparatus may be the terminal device shown in FIG. 1, or may be the network device (for example, a RAN node) shown in FIG. 1, or may be a chip system used in the terminal device or the network device shown in FIG. 1.

As shown in FIG. 3, the communication apparatus 1300 includes a processing unit 1310 and a transceiver unit 1320. The communication apparatus 1300 is configured to implement the function of the terminal apparatus or the network apparatus in the method embodiment shown in FIG. 2. The transceiver unit 1320 may also be referred to as a communication unit. The transceiver unit 1320 may include a sending unit and a receiving unit.

When the communication apparatus 1300 is configured to implement the function of the terminal apparatus in the method embodiment shown in FIG. 2, the processing unit 1301 may perform step 202, and the transceiver unit 1320 may perform step 201, step 203, step 204, and step 205. In a possible implementation, the receiving unit may be configured to receive first information, and the sending unit or the receiving unit may be further configured to perform transmission of a first signal. In another possible implementation, the receiving unit may be further configured to receive second information, and the sending unit may be further configured to send third information.

When the communication apparatus 1300 is configured to implement the function of the network apparatus in the method embodiment shown in FIG. 2, the transceiver unit 1320 may perform step 201, step 203, step 204, and step 205. In a possible implementation, the sending unit may be further configured to send first information, and the sending unit or the receiving unit may be further configured to perform transmission of a first signal. In another possible implementation, the sending unit may be configured to send second information, and the receiving unit may be configured to receive third information.

For more detailed descriptions of the processing unit 1310 and the transceiver unit 1320, refer to related descriptions in the method embodiment shown in FIG. 2.

As shown in FIG. 4, the communication apparatus 1400 includes a processor 1410 and an interface circuit 1420. The processor 1410 and the interface circuit 1420 are coupled to each other. It may be understood that the interface circuit 1420 may be a transceiver or an input/output interface. The input/output interface is configured to input and/or output information. Outputting may be understood as sending, and inputting may be understood as receiving. Optionally, the communication apparatus 1400 may further include a memory 1430, configured to: store instructions to be executed by the processor 1410, store input data needed for running instructions by the processor 1410, or store data generated after the processor 1410 runs instructions.

When the communication apparatus 1400 is configured to implement the method shown in FIG. 3, the processor 1410 is configured to implement the function of the processing unit 1310, and the interface circuit 1420 is configured to implement the function of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements the function of the network apparatus in the foregoing method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B through another entity. Similarly, that the entity B receives information from the entity A may be that the entity B directly receives information sent by the entity A, or may be that the entity B indirectly receives information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, the storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When the software is used to implement embodiments, all or a part of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers (for example, digital numbers "first" and "second"; and for another example, letter numbers "implementation A1", "implementation B1", and "implementation C1") in embodiments of this application are merely used for distinguishing for ease of description, and are not used to limit the scope of embodiments of this application. Sequence numbers of the foregoing processes do not mean an execution sequence. The execution sequence of the processes should be determined based on functions and internal logic of the processes.

## Claims

1. A communication method, wherein the method is applicable to a terminal apparatus, and the method comprises:
receiving first information, wherein the first information comprises information indicating indexes of a plurality of resources; and
performing transmission of a first signal, wherein a spatial relation of the first signal is associated with a spatial relation of the plurality of resources.

2. The method according to claim 1, wherein before the receiving the first information, the method further comprises:
receiving second information, wherein the second information comprises resource configuration information, and the plurality of resources belong to resources indicated by the resource configuration information; and
sending third information, wherein the third information comprises at least one measurement result, the at least one measurement result is obtained by measuring a reference signal corresponding to the resource indicated by the resource configuration information, and the plurality of resources are determined based on the at least one measurement result.

3. A communication method, wherein the method is applicable to a network apparatus, and the method comprises:
sending first information, wherein the first information comprises information indicating indexes of a plurality of resources; and
performing transmission of a first signal, wherein a spatial relation of the first signal is associated with a spatial relation of the plurality of resources.

4. The method according to claim 3, wherein before the sending the first information, the method further comprises:
sending second information, wherein the second information comprises resource configuration information, and the plurality of resources belong to resources indicated by the resource configuration information; and
receiving third information, wherein the third information comprises at least one measurement result, the at least one measurement result is obtained by measuring a reference signal corresponding to the resource indicated by the resource configuration information, and the plurality of resources are determined based on the at least one measurement result.

5. The method according to claim 2 or 4, wherein the information indicating the indexes of the plurality of resources comprises at least one of the following:
information indicating a resource quantity K1, wherein resource indexes associated with the resource quantity K1 are indexes of K1 resources associated with a first measurement result, the first measurement result is a measurement result, associated with the K1 resources, among the at least one measurement result, and K1 is a positive integer;
information indicating a measurement result index K2, wherein a measurement result indicated by the measurement result index K2 belongs to the at least one measurement result, and the measurement result index K2 is associated with the plurality of resources;
information indicating a resource group index K3, wherein a resource group corresponding to the resource group index K3 comprises the plurality of resources; or
the indexes of the plurality of resources.

6. The method according to claim 5, wherein when the information indicating the indexes of the plurality of resources comprises the information indicating the resource quantity K1, the at least one measurement result comprises a plurality of measurement results, and two measurement results among the plurality of measurement results are associated with different resource quantities.

7. The method according to claim 5, wherein when the information indicating the indexes of the plurality of resources comprises the information indicating the measurement result index K2,
the at least one measurement result comprises a plurality of measurement results, and two measurement results among the plurality of measurement results are associated with a same resource quantity.

8. The method according to claim 5, wherein when the information indicating the indexes of the plurality of resources comprises the information indicating the measurement result index K2,
the at least one measurement result is associated with M1 resources in the resource configured by the resource configuration information, M1 is an integer greater than 1, the M1 resources correspond to a plurality of resource groups, one measurement result among the at least one measurement result is associated with one of the plurality of resource groups, the plurality of resource groups comprise a resource group formed by resource combinations obtained by selecting K0 resources from the M1 resources, and K0 is an integer greater than 1 and less than M1.

9. The method according to claim 5, wherein when the information indicating the indexes of the plurality of resources comprises the information indicating the resource group index K3,
one measurement result among the at least one measurement result is associated with one resource, the at least one measurement result comprises a plurality of measurement results, and there is a correspondence between the resource group index K3 and the plurality of resources associated with the plurality of measurement results.

10. The method according to any one of claims 2, 4, and 5 to 9, wherein the third information further comprises a resource index associated with one or more measurement result in the at least one measurement result; and
one measurement result is associated with one or more resource indexes.

11. The method according to any one of claims 2, 4, and 5 to 10, wherein the at least one measurement result comprises the first measurement result and a second measurement result;
the first measurement result is obtained by the terminal apparatus by measuring a reference signal, on a resource indicated by a resource index associated with the first measurement result, received by at least one first antenna port;
the second measurement result is obtained by the terminal apparatus by measuring a reference signal, on a resource indicated by a resource index associated with the second measurement result, received by at least one second antenna port; and
the at least one first antenna port is different from the at least one second antenna port.

12. A communication apparatus, comprising a module configured to perform the method according to any one of claims 1 to 11.

13. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 11 by using a logic circuit or by executing code instructions.

14. A communication apparatus, comprising a processor, wherein the processor is configured to implement the method according to any one of claims 1 to 11 by using a logic circuit or by executing code instructions.

15. A computer-readable storage medium, wherein the storage medium stores a computer program or instructions; and when the computer program or the instructions are executed by a communication apparatus, the method according to any one of claims 1 to 11 is implemented.
